# EUROPEAN PATENT APPLICATION

(11) **EP 4 467 277 A1**
(43) Date of publication of application: **27.11.2024**
(21) Application number: 22921835.9
(22) Date of filing: 19.01.2022
(51) Int. Cl.: B23K 26/342

(54) **SHAPING SYSTEM AND SHAPING METHOD**

(71) Applicant: NIKON CORPORATION, Minato-ku Tokyo 108-6290 (JP)
(72) Inventor: MURATA, Hiromichi, Tokyo 108-6290 (JP); FUNATSU, Takayuki, Tokyo 108-6290 (JP); ISHIKAWA, Motofusa, Tokyo 108-6290 (JP)
(74) Representative: Hoffmann Eitle
(86) International application number: PCT/JP2022/001729
(87) International publication number: WO 2023/139674

(57) **Abstract**

A build system includes: a build apparatus that is configured to irradiate an object with an energy beam from a position above the object and that is configured to build a build object on the object by supplying a build material to an irradiation position of the energy beam; a support apparatus that includes three or more support members for supporting the object; and a heating apparatus configured to heat the object from a position under the object, each support member includes: a connecting part that contacts the object; and a support part configured to support the object, a stiffness of the support part in a first direction is lower than a stiffness of the support part in a second direction that intersects the first direction, the second direction is a direction that intersects a plane including the connecting parts of the three or more support members.

## Description

### Technical Field

The present invention relates to a build system that is configured to build a build object, for example.

### Background Art

A Patent Literature 1 discloses one example of a build apparatus that builds a build object. One technical problem of the build apparatus is to properly build the build object.

### Citation List

### Patent Literature

Patent Literature 1: US2017/0001374A1

### Summary of Invention

A first aspect provides a build system including: a build apparatus that is configured to irradiate an object with an energy beam from a position above the object and that is configured to build a build object on the object by supplying a build material to an irradiation position of the energy beam; a support apparatus that includes three or more support members supporting the object; and a heating apparatus that is configured to heat the object from a position under the object, wherein each of the three or more support members includes: a connecting part that contacts the object; and a support part that is configured to support the object, a stiffness of the support part in a first direction is lower than a stiffness of the support part in a second direction that intersects the first direction, the second direction is a direction that intersects a plane including the connecting parts of the three or more support members.

A second aspect provides a build system including: a build apparatus that is configured to irradiate an object with an energy beam from a position above the object and that is configured to build a build object on the object by supplying a build material to an irradiation position of the energy beam; a support apparatus that supports the object; a heating apparatus that is configured to heat the object from a position under the object; and a force applying unit that applies a force acting in a direction directed from the heating apparatus toward a lower surface of the object or a thermally conductive member that is disposed between the heating apparatus and the object.

A third aspect provides a build system including: a build apparatus that is configured to irradiate an object with an energy beam from a position above the object and that is configured to build a build object on the object by supplying a build material to an irradiation position of the energy beam; a support apparatus that supports the object; a heating apparatus that is configured to heat the object; and a control apparatus that controls the heating apparatus, wherein the heating apparatus includes: a first heating surface that is configured to heat a first part of the object from a position under the object; a second heating surface that is configured to heat a second part, which is different from the first part, of the object from a position under the object, the control apparatus controls the heating apparatus so that a temperature of the first heating surface and a temperature of the second heating surface are different temperatures.

A fourth aspect provides a build system including: a build apparatus that is configured to irradiate an object with an energy beam and that is configured to build a build object on the object by supplying a build material to an irradiation position of the energy beam; a support apparatus that supports the object; and a heating apparatus that is configured to heat the object, wherein the support apparatus includes a support member that is configured to support the object, a stiffness of the support member in a first direction is lower than a stiffness of the support member in a second direction that intersects the first direction.

A fifth aspect provides a build system including: a build apparatus that is configured to irradiate an object with an energy beam and that is configured to build a build object on the object by supplying a build material to an irradiation position of the energy beam; a support apparatus that supports the object; a heating apparatus that is configured to heat the object; and a force applying unit that applies a force acting in a direction directed from the heating apparatus toward the object.

A sixth aspect provides a build system including: a build apparatus that is configured to irradiate an object with an energy beam and that is configured to build a build object on the object by supplying a build material to an irradiation position of the energy beam; a support apparatus that supports the object; a heating apparatus that is configured to heat the object; and a control apparatus that controls the heating apparatus, wherein the heating apparatus includes: a first heating surface that is configured to heat a first part of the object; a second heating surface that is configured to heat a second part, which is different from the first part, of the object.

An operation and another advantage of the present invention will be apparent from an example embodiment described below.

### Brief Description of Drawings

[FIG. 1] FIG. 1 is a block diagram that illustrates a system configuration of a build system in a present example embodiment.
[FIG. 2] FIG. 2 is a cross-sectional view that illustrates a configuration of the build system in the present example embodiment.
[FIG. 3] FIG. 3 is a cross-sectional view that illustrates a configuration of a heating support unit in the present example embodiment.
[FIG. 4] FIG. 4 is a perspective view that illustrates the configuration of the heating support unit in the present example embodiment.
[FIG. 5] FIG. 5 is a cross-sectional view that illustrates the configuration of the heating support unit in the present example embodiment.
[FIG. 6] FIG. 6 is a cross-sectional view that illustrates disposed positions of a plurality of support parts.
[FIG. 7] FIG. 7 is a cross-sectional view that illustrates a state of the heating support unit in a build period during which a build apparatus builds a build object on a workpiece.
[FIG. 8] FIG. 8 is a cross-sectional view that illustrates a state of the heating support unit that supports a deformed workpiece.
[FIG. 9] FIG. 9 is a cross-sectional view that illustrates the state of the heating support unit that supports the deformed workpiece.
[FIG. 10] FIG. 10 is a cross-sectional view that illustrates the state of the heating support unit that supports the deformed workpiece.
[FIG. 11] FIG. 11 is a plan view that illustrates a heating surface of a heating support unit in a first modified example.
[FIG. 12] FIG. 12 is a plan view that illustrates the heating surface of the heating support unit in the first modified example.
[FIG. 13] FIG. 13 is a plan view that illustrates the heating surface of the heating support unit in the first modified example.
[FIG. 14] FIG. 14 is a block diagram that illustrates a heating support unit in a second modified example.
[FIG. 15] Each of FIG. 15A to FIG. 15B is a plan view that illustrates a heating surface of the heating support unit in the second modified example.

### Example Embodiments

Next, with reference to drawings, an example embodiment of a build system will be described. In the below-described description, the example embodiment of the build system will be described by using a build system SYS that is configured to process a workpiece W that is one example of an object. Especially, in the below-described description, the example embodiment of a build apparatus and a build method will be described by using the build system SYS that is configured to perform an additive manufacturing based on a Laser Metal Deposition (LMD). The additive manufacturing based on the Laser Metal Deposition is an additive manufacturing for building a build object that is integrated with or separatable from the workpiece W by melting a build material M supplied to the workpiece W with build light EL (namely, an energy beam in a form of light). However, the build system SYS may perform an additive manufacturing based on a method different from the Laser Metal Deposition. Alternatively, the build system SYS may perform any processing (for example, a subtractive manufacturing) different from the additive manufacturing.

Note that the Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming.

Moreover, in the below described description, a positional relationship of various components that constitute the build system SYS will be described by using an XYZ rectangular coordinate system that is defined by a X-axis, a Y-axis and a Z-axis that are perpendicular to one another. Note that each of an X-axis direction and a Y-axis direction is assumed to be a horizontal direction (namely, a predetermined direction in a horizontal plane) and a Z-axis direction is assumed to be a vertical direction (namely, a direction that is perpendicular to the horizontal plane, and substantially an up-down direction), for the purpose of simple description, in the below described description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. An XY plane may be a horizontal direction.

### (1) Configuration of Build System SYS

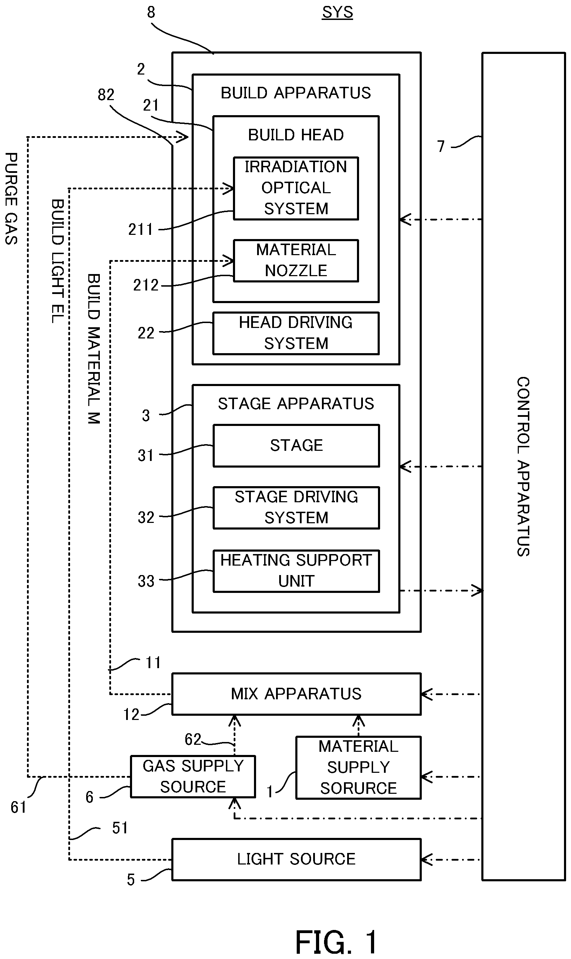

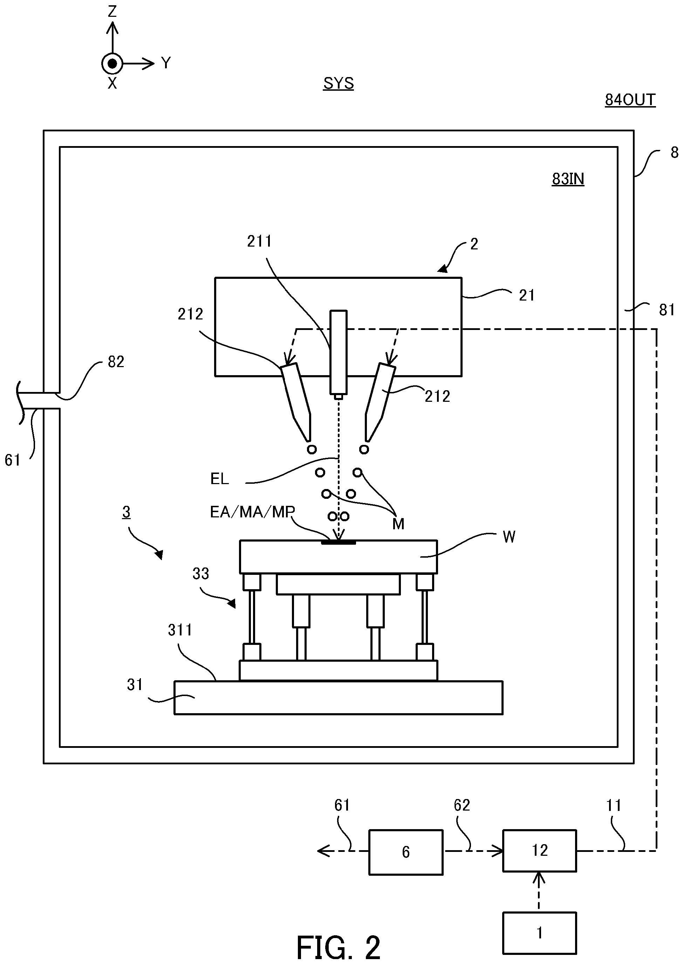

Firstly, with reference to FIG. 1 and FIG. 2, a configuration of the build system SYS in the present example embodiment will be described. FIG. 1 is a system configuration diagram that illustrates a system configuration of the build system SYS in the present example embodiment. FIG. 2 is a cross-sectional view that illustrates the configuration of the build system SYS in the present example embodiment.

The build system SYS is configured to perform the additive manufacturing on the workpiece W. The build system SYS is configured to build the build object on the workpiece W by performing the additive manufacturing on the workpiece W. Specifically, the build system SYS is configured to build the build object integrated with (alternatively, separatable from) the workpiece W by performing the additive manufacturing on the workpiece W. In this case, the additive manufacturing performed on the workpiece W corresponds to a processing for adding, to the workpiece W, the build object integrated with (alternatively, separatable from) the workpiece W. Note that the build object in the present example embodiment may mean any object built by the build system SYS. For example, the build system SYS is configured to build a 3D (three-dimensional) structural object ST (namely, a 3D object having a magnitude (a size) in each of 3D directions, a solid object, in other words, an object having a magnitude (a size) in the X-axis direction, the Y-axis direction, and the Z-axis direction) as one example of the build object.

In a case where the workpiece W is a below-described stage 31, the build system SYS is configured to perform the additive manufacturing on the stage 31. In a case where the workpiece W is a placed object that is an object placed on the stage 31, the build system SYS is configured to perform the additive manufacturing on the placed object. The placed object placed on the stage 31 may be another 3D structural object ST built by the build system SYS (namely, an existing structural object). Note that FIG. 2 illustrates an example in which the workpiece W is the existing structural object held by the stage 31. Moreover, in the below-described description, the example in which the workpiece W is the existing structural object held by the stage 31 will be described.

The workpiece W may be an item that needs to be repaired having a missing part. In this case, the build system SYS may perform a repair processing for repairing the item that needs to be repaired by performing the additive manufacturing for building the build object for filling in the missing part. Namely, the additive manufacturing performed by the build system SYS may include the additive manufacturing for adding, to the workpiece W, the build object for filling in the missing part.

As described above, the build system SYS is configured to perform the additive manufacturing based on the Laser Metal Deposition. Namely, it can be said that the build system SYS is a 3D printer that forms an object by using an Additive layer manufacturing technique. Note that the Additive layer manufacturing technique may be referred to as a Rapid Prototyping, a Rapid Manufacturing or an Additive Manufacturing.

The build system SYS performs the additive manufacturing by processing the build material M with the build light EL that is an energy beam. The build material M is a material that is molten by an irradiation with the build light EL having a predetermined intensity or more intensity. At least one of a metal material and a resin material is usable as the build material M, for example. However, another material that is different from the metal material and the resin material may be used as the build material M. The build material M is powder-like or grain-like material. Namely, the build material M is powdery material. However, the build material M may not be the powdery material. For example, at least one of a wired-like build material and a gas-like build material may be used as the build material M.

In order to perform the additive manufacturing, the build system SYS includes a material supply source 1, a build apparatus 2, a stage apparatus 3, a measurement apparatus 4, a light source 5, a gas supply source 6, and a control apparatus 7, as illustrated in FIG. 1 to FIG. 2. The build apparatus 2 and the stage apparatus 3 may be contained in a chamber space 83IN in a housing 8.

The material supply source 1 is configured to supply the build material M to the build apparatus 2. The material supply source 1 supplies, to the build apparatus 2, the build material M the amount of which is necessary for performing the additive manufacturing per unit time by supplying the build material M the amount of which is based on the necessary amount.

The build apparatus 2 builds the build object by processing the build material M supplied from the material supply source 1. In order to build the build object, the build apparatus 2 include a build head 21, and a head driving system 22. Furthermore, the build head 21 includes a irradiation optical system 211, and a material nozzle 212 (namely, supply system that supplies the build material M). Incidentally, the build head 21 includes a single irradiation optical system 211 in an example illustrate in FIG. 1 to FIG. 2, however, the build head 21 may include a plurality of irradiation optical systems 211. Moreover, the build head 21 includes a single material nozzle 212 in an example illustrate in FIG. 1 to FIG. 2, however, the build head 21 may include a plurality of material nozzles 212.

The irradiation optical system 211 is an optical system (for example, a condensing optical system) for emitting the build light EL. Specifically, the irradiation optical system 211 is optically connected to the light source 5 that generates the build light EL through a light transmitting member 51 such as an optical fiber and light pipe. The irradiation optical system 211 emits the build light EL transmitted from the light source 5 through the light transmitting member 51. The irradiation optical system 211 emits the build light EL in a downward direction (namely, toward a -Z side) from the irradiation optical system 211. The stage 31 is disposed below the irradiation optical system 211. In a case where the workpiece W is placed on the stage 31, the irradiation optical system 211 irradiates the workpiece with the emitted build light EL. In this case, the irradiation optical system 211 irradiates the workpiece W with the workpiece W from a position above the workpiece W. Specifically, the irradiation optical system is configured to irradiate an target irradiation area EA, which is set on the workpiece W or near the workpiece W as an area that is irradiated with the build light EL (typically, on which the build light EL is condensed), with the build light EL. Furthermore, a state of the irradiation optical system 211 is switchable between a state in which the target irradiation area EA is irradiated with the build light EL and a state in which the target irradiation area EA is not irradiated with the build light EL under the control of the control apparatus 7. Note that a direction of the build light EL emitted from the irradiation optical system 211 is not limited to a direct downward direction (namely, coincident with the -Z-axis direction), and may be a direction that is inclined with respect to the Z-axis by a predetermined angle, for example.

The material nozzle 212 supplies (for example, injects, jets, blows out or sprays) the build material M. The material nozzle 212 is physically connected to the material supply source 1, which is a supply source of the build material M, through a supply pipe 11 and a mix apparatus 12. The material nozzle 212 supplies the build material M supplied from the material supply source 1 through the supply pipe 11 and the mix apparatus 12. The material nozzle 212 may pressure-feed the build material M supplied from the material supply source 1 through the supply pipe 11. Namely, the build material M from the material supply source 1 and gas for feeding (namely, pressure-feed gas, and inert gas such as Nitrogen or Argon, for example) may be mixed by the mix apparatus 12 and then pressure-fed to the material nozzle 212 through the supply pipe 11. As a result, the material nozzle 212 supplies the build material M together with the gas for feeding. Purge gas supplied from the gas supply source 6 is used as the gas for feeding, for example. However, gas supplied from a gas supply source that is different from the gas supply source 6 may be used as the gas for feeding. Note that the material nozzle 212 is illustrated to have a tube-like shape in FIG. 2, however, a shape of the material nozzle 212 is not limited to this shape. The material nozzle 212 supplies the build material M in a downward direction (namely, toward the - Z side) from the material nozzle 212. The stage 31 is disposed below the material nozzle 212. In a case where the workpiece W is placed on the stage 31, the material nozzle 212 supplies the build material M toward the workpiece W or a vicinity of the workpiece W. Note that a supply direction of the build material M supplied from the material nozzle 212 is a direction that is inclined with respect to the Z-axis by a predetermined angle (as one example, an acute angle), however, it may be the -Z-axis direction (namely, a direct downward direction).

In the present example embodiment, the material nozzle 212 supplies the build material M to an irradiation position of the build light EL (namely, the target irradiation area EA that is irradiated with the build light EL from the irradiation optical system 211). Therefore, the positions of the material nozzle 212 and the irradiation optical system 211 are adjusted so that a target supply area MA which is set on the workpiece W or near the workpiece W as an area to which the material nozzle 212 supplies the build material M, is coincident with (alternatively, is overlapped at least partially with) the target irradiation area EA. In this case, the build material M that has been supplied from the material nozzle 212 is irradiated with the build light EL emitted from the irradiation optical system 211. As a result, the build material M is molten. Namely, a melt pool MP including the molten build material M is formed on the workpiece W.

Note that the material nozzle 212 may supply the build material M to the melt pool MP that is formed by the build light EL emitted from the irradiation optical system 211. However, the material nozzle 212 may not supply the build material M to the melt pool MP. For example, the build system SYS may melt the build material M by the build light EL before the build material M from the material nozzle 212 reaches the workpiece W and may make the molten build material M adhere to the workpiece W.

The head driving system 22 moves the build head 21 under the control of the control apparatus 7. Namely, the head driving system 22 moves the irradiation optical system 211 and the material nozzle 212 under the control of the control apparatus 7. The head driving system 22 moves the build head 21 along at least one of the X-axis, the Y-axis, the Z-axis, the θX direction, the θY direction, and the θZ direction, for example. When the head driving system 22 moves the build head 21, a relative position between the build head 21 and each of the stage 31 and the workpiece W placed on the stage 31 changes. As a result, the target irradiation area EA and the target supply area MA (furthermore, the melt pool MP) relatively moves relative to the workpiece W.

As described above, the build material M supplied from the material nozzle 212 is irradiated with the build light EL emitted from the irradiation optical system 211. As a result, a melt pool MP is formed on the workpiece W. After the melt pool MP is no longer irradiated with the build light EL due to the movement of the build head 21, the build material M molten in the melt pool MP are solidified. Namely, the build object corresponding to a deposition including the solidified build material M if formed. The build system SYS repeats a series of build process including the formation of the melt pool MP by the irradiation with the build light EL and the solidification of the molten build material M while moving the build head 21 along at least one of the X-axis direction and the Y-axis direction. Namely, the build system SYS repeats a series of build process including the formation of the melt pool MP by the irradiation with the build light EL and the solidification of the molten build material M while changing the positional relationship between the build head 21 and the workpiece W (furthermore, a positional relationship between the build head 21 and the build object formed on the workpiece W). As a result, a structural layer SL corresponding to an aggregation of the build object formed in a pattern based on a movement trajectory of the melt pool MP is formed. The build apparatus 2 builds a plurality of structural layers in sequence so that the plurality of structural layers are stacked. As a result, the 3D structural object corresponding to an aggregate of the plurality of structural layers is additively built.

The stage apparatus 3 includes the stage 31, a stage driving system 32, and a heating support unit 33.

The workpiece W is placed on the stage 31. In the present example embodiment, the workpiece W is placed on the stage 31 through the heating support unit 33. Specifically, the workpiece W is supported by the heating support unit 33. The heating support unit 33 supporting the workpiece W is placed on the stage 31. In this case, the stage 31 may be considered to support the workpiece W through the heating support unit 33.

The stage 31 may be configured to hold the heating support unit 33 placed on the stage 31. In this case, the stage 31 may include at least one of a mechanical chuck, an electrostatic chuck and a vacuum suction chuck to hold the heating support unit 33. Alternatively, the stage 31 may not be configured to hold the heating support unit 33 placed on the stage 31. In this case, the heating support unit 33 may be placed on the stage 31 without clamp. The above-described irradiation optical system 211 emits the build light EL in at least a part of a period during which the workpiece W is placed on the stage 31 through the heating support unit 33. Furthermore, the above-described material nozzle 212 supplies the build material M in at least part of the period during which the workpiece W is placed on the stage 31 through the heating support unit 33.

The stage driving system 32 moves the stage 31. The stage driving system 32 moves the stage 31 along at least one of the X axis, the Y axis, the Z axis, the θX direction, the θY direction, and the θZ direction, for example. When the stage driving system 32 moves the stage 31, the relative position between the build head 21 and each of the stage 31 and the workpiece W placed on the stage 31 changes. As a result, the target irradiation area EA and the target supply area MA (furthermore, the melt pool MP) relatively moves relative to the workpiece W.

The heating support unit 33 is configured to support the workpiece W. The heating support unit 33 may be configured to hold the workpiece W. In this case, the heating support unit 33 may include at least one of a mechanical chuck, an electrostatic chuck, and a vacuum suction chuck to hold the workpiece W. Alternatively, the heating support unit 33 may not be configured to hold the workpiece W. In this case, the workpiece W may be supported by the heating support unit 33 without clamp. The above-described irradiation optical system 211 emits the build light EL in at least a part of a period during which the heating support unit 33 supports the workpiece W. Furthermore, the above-described material nozzle 212 supplies the build material M in at least part of the period during which the heating support unit 33 supports the workpiece W.

The heating support unit 33 is configured to heat the supported workpiece W, In addition to supporting the workpiece W. Namely, the heating support unit 33 has a function of supporting the workpiece W and a function of heating the workpiece W.

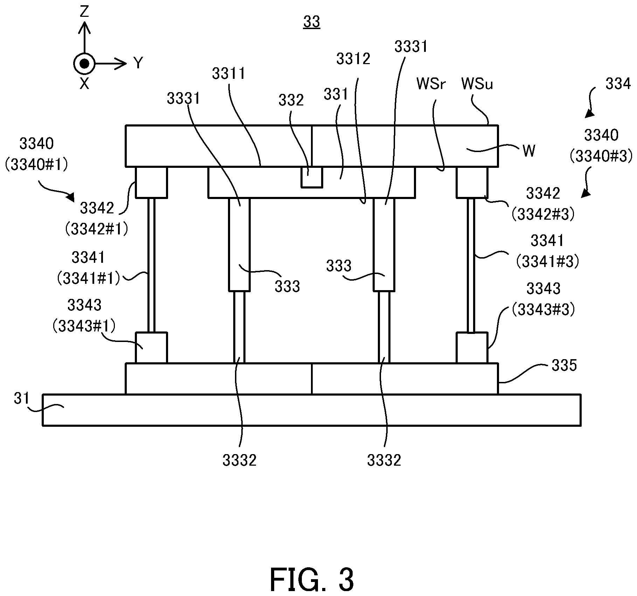

Incidentally, a detailed configuration of the heating support unit 33 will be described in detail later with reference to FIG. 3 to FIG. 6.

The light source 5 is configured to emit at least one of infrared light, visible light and ultraviolet light as the build light EL, for example. However, other type of light may be used as the build light EL. The build light EL may include a plurality of pulsed lights (namely, a plurality of pulsed beams). The build light EL may include continuous wave (CW) light. The build light EL may be a laser light. In this case, the light source 5 may include semiconductor laser such as a laser light source (for example, a Laser Diode (LD)). The laser light source may include at least one of a fiber laser, a CO₂ laser, a YAG laser, an Excimer laser and the like. However, the build light EL may not be the laser light. The light source 5 may include any light source (for example, at least one of a LED (Light Emitting Diode), a discharge lamp and the like).

The gas supply source 6 is a supply source of the purge gas for purging the chamber space 83IN in the housing 8. The purge gas includes inert gas. At least one of Nitrogen gas and Argon gas is one example of the inert gas. The gas supply source 6 is connected to the chamber space 83IN through a supply port 82 formed in a wall member 81 of the housing 8 and a supply pipe 61 connecting the gas supply source 6 to the supply port 82. The gas supply source 6 supplies the purge gas to the chamber space 83IN through the supply pipe 61 and the supply port 82. As a result, the chamber space 83IN becomes a space purged by the purge gas. The purge gas supplied to the chamber space 83IN may be discharged from a non-illustrated outlet port formed in the wall member 81. Note that the gas supply source 6 may be a tank that stores the inert gas such as the Nitrogen gas and the Argon gas. In a case where the purge gas is the Nitrogen gas, the gas supply source 6 may be a Nitrogen gas generation apparatus that generates the Nitrogen gas by using air as material.

Incidentally, in the above-described description, the purge gas supplied from the gas supply source 6 is supplied to the supply port 82 formed in the chamber space 83IN in order to purge the entire chamber space 83IN in the housing 8. However, the purge gas may be supplied from a non-illustrated supply port formed in the build head 21 in order to locally fill a space near the irradiation position of the build light EL from the irradiation optical system 211 with the purge gas, in addition to or instead of being supplied to the supply port 82 in order to purge the entire chamber space 83IN. In this case, in a case where the build material M is pressure-fed by the purge gas as described below, the material nozzle 212 that supplies the purge gas may locally fill the space near the irradiation position of the build light EL with the purge gas. A supply port for supplying the purge gas may be formed in the material nozzle 212, and the supply port supplied to the material nozzle 212 may locally fill the space near the irradiation position of the build light EL with the purge gas.

In a case where the material nozzle 212 supplies the build material M together with the purge gas, the gas supply source 6 may supply the purge gas to the mix apparatus 12 to which the build material M is supplied from the material supply source 1. Specifically, the gas supply source 6 may be connected to the mix apparatus 12 through a supply pipe 62 that connects the gas supply source 6 and the mix apparatus 12. As a result, the gas supply source 6 supplies the purge gas to the mix apparatus 12 through the supply pipe 62. In this case, the build material M from the material supply source 1 may be supplied (specifically, pressure-fed) to the material nozzle 212 through the supply pipe 11 by the purge gas supplied from the gas supply source 6 through the supply pipe 62. Namely, the gas supply source 6 may be connected to the material nozzle 212 through the supply pipe 62, the mix apparatus 12 and the supply pipe 11. In this case, the material nozzle 212 supplies the build material M together with the purge gas for pressure-feeding the build material M.

The control apparatus 7 controls an operation of the build system SYS. For example, the control apparatus 7 may control the build apparatus 2 (for example, at least one of the build head 21 and the head driving system 22) of the build system SYS to perform the additive manufacturing on the workpiece W. For example, the control apparatus 7 may control the stage apparatus 3 (for example, stage driving system 32) of the build system SYS to perform the additive manufacturing on the workpiece W.

The control apparatus 7 may include a calculation apparatus and a storage apparatus. The calculation apparatus may include at least one of a CPU (Central Processing Unit) and a GPU (Graphic Processing Unit), for example. The storage apparatus may include a memory. The control apparatus 7 serves as an apparatus for controlling the operation of the build system SYS by means of the calculation apparatus executing a computer program. The computer program is a computer program that allows the calculation apparatus to execute (namely, to perform) a below-described operation that should be executed by the control apparatus 7. Namely, the computer program is a computer program that allows the control apparatus 7 to function so as to make the build system SYS execute the below-described operation. The computer program executed by the calculation apparatus may be recorded in the storage apparatus (namely, a recording medium) of the control apparatus 7, or may be recorded in any recording medium (for example, a hard disk or a semiconductor memory) that is built in the control apparatus 7 or that is attachable to the control apparatus 7. Alternatively, the calculation apparatus may download the computer program that should be executed from an apparatus disposed at an outside of the control apparatus 7 through a network interface.

The control apparatus 7 may control an emitting aspect of the build light EL by the irradiation optical system 211. The emitting aspect may include at least one of an intensity of the build light EL and an emitting timing of the build light EL, for example. In a case where the build light EL includes the plurality of pulsed lights, the emitting aspect may include at least one of an ON time of the pulsed light, an emission cycle of the pulsed light, and a ratio (what we call a duty ratio) of a length of the ON time of the pulsed light and a length of the emission cycle of the pulsed light, for example. Furthermore, the control apparatus 7 may control a moving aspect of the build head 21 by the head driving system 22. In this case, the control apparatus 7 may be referred to as a head movement control unit that controls the movement of the build head 21 by the head driving system 22. The control apparatus 7 may control a moving aspect of the stage 31 by the stage driving system 32. In this case, the control apparatus 7 may be referred to as a placing part movement control unit that controls the movement of the stage 31 by the stage driving system 32. The moving aspect may include at least one of a moving distance, a moving speed, a moving direction, and a moving timing (a moving period), for example. In a case where the stage driving system 32 moves the stage 31 so that the stage 31 rotates as described above, the control apparatus 7 may be referred to as a rotation control unit that controls the rotation of the stage 31 by the stage driving system 32. In this case, the moving aspect of the stage 31 may include a rotating aspect of the stage 31. The rotating aspect may include at least one of a rotating amount (for example, a rotating angle), a rotating speed, a rotating direction, and a rotating timing (a rotating period). Moreover, in a case where the stage driving system 32 moves the stage 31 so that the stage 31 is inclined (for example, inclined with respect to the XY plane that is the horizontal plane) as described above, the control apparatus 7 may be referred to as an inclination control unit that controls the inclination of the stage 31 by the stage driving system 32. In this case, the moving aspect of the stage 31 may include an inclination aspect of the stage 31. The inclination aspect may include at least one of an inclination amount (for example, an inclination angle, typically, an inclination angle with respect to the XY plane that is the horizontal plane), an inclination speed, an inclination direction, and an inclination timing (an inclination period). Furthermore, the control apparatus 7 may control a supply aspect of the build material M by the material nozzle 212. The supply aspect may include at least one of the supplied amount (especially, the supplied amount per unit time) and a supply timing (a supply period). The control apparatus 7 may control a heating aspect of the workpiece W by the heating support unit 33. The heating aspect may include at least one of a heating speed, a heating period, a heated amount (for example, an amount of energy transferred from the heating support unit 33 to the workpiece W to heat the workpiece W), and a heating position.

The control apparatus 7 may not be disposed in the build system SYS. For example, the control apparatus 7 may be disposed at the outside of the build system SYS as a server or the like. In this case, the control apparatus 7 may be connected to the build system SYS through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 7 and the build system SYS may be configured to transmit and receive various information through the network. Moreover, the control apparatus 7 may be configured to transmit information such as a command and a control parameter to the build system SYS through the network. The build system SYS may include a reception apparatus that is configured to receive the information such as the command and the control parameter from the control apparatus 7 through the network. The build system SYS may include a transmission apparatus that is configured to transmit the information such as the command and the control parameter to the control apparatus 7 through the network (namely, an output apparatus that is configured to output information to the control apparatus 7). Alternatively, a first control apparatus that is configured to perform a part of the arithmetic processing performed by the control apparatus 7 may be disposed in the build system SYS and a second control apparatus that is configured to perform another part of the arithmetic processing performed by the control apparatus 7 may be disposed at the outside of the build system SYS.

An arithmetic model that is buildable by machine learning may be implemented in the control apparatus 7 by the calculation apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control apparatus 7 may control the operation of the build system SYS by using the arithmetic model. Namely, the operation for controlling the operation of the build system SYS may include an operation for controlling the operation of the build system SYS by using the arithmetic model. Note that the arithmetic model that has been built by offline machine learning using training data may be implemented in the control apparatus 7. Moreover, the arithmetic model implemented in the control apparatus 7 may be updated by online machine learning on the control apparatus 7. Alternatively, the control apparatus 7 may control the operation of the build system SYS by using the arithmetic model implemented in an apparatus external to the control apparatus 7 (namely, an apparatus external to the build system SYS), in addition to or instead of the arithmetic model implemented on the control apparatus 7.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 7. The recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the control apparatus 7 by means of the control apparatus 7 (namely, a computer) executing the computer program, may be realized by a hardware such as a predetermined gate array (a FPGA (Field Programmable Gate Array), an ASIC (Application Specific Integrated Circuit)) of the control apparatus 7, or may be realized in a form in which the logical process block and a partial hardware module that realizes a partial element of the hardware are combined.

### (2) Heating Support Unit 33

Next, the heating support unit 33 will be further described.

### (2-1) Configuration of Heating Support Unit 33

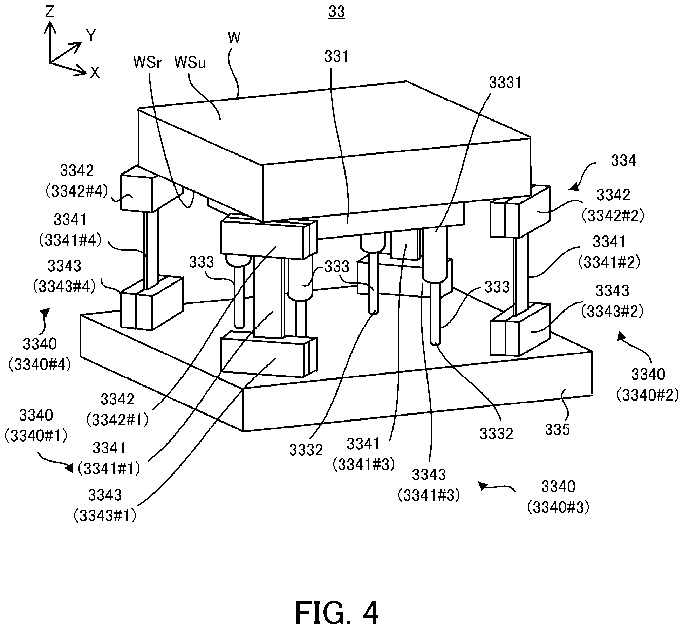

Firstly with reference to FIG. 3 and FIG. 4, the configuration of the heating support unit 33 will be described. FIG. 3 is a cross-sectional view that illustrates the configuration of the heating support unit 33. FIG. 4 is a perspective view that illustrates the configuration of the heating support unit 33.

As illustrated in FIG. 3 and FIG. 4, the heating support unit 33 include a heating apparatus 331, a temperature sensor 332, a force applying apparatus 333, a support apparatus 334, and a cooling apparatus 335.

The heating apparatus 331 is an apparatus that is configured to heat the workpiece W. The heating apparatus 331 may be any apparatus as long as it is configured to heat the workpiece W. For example, the heating apparatus 331 may be an apparatus that is configured to heat the workpiece W by transferring heat to the workpiece W. For example, the heating apparatus 331 may include a heater (for example, a cartridge heater) that is configured to heat the workpiece W BY using heat generated in a conductor through which an electric current flows. For example, the heating apparatus 331 may include a heater (for example, a cartridge heater) that is configured to heat the workpiece W by using a resistance heating. For example, the heating apparatus 331 may include a heater (for example, an infrared radiation heater) that is configured to heat the workpiece W by using electromagnetic wave such as infrared radiation. For example, the heating apparatus 331 may include other type of heater.

In the present example embodiment, the heating apparatus 331 is disposed under the workpiece W. In this case, the heating apparatus 331 may heat the workpiece W from a position under the workpiece W. Specifically, the heating apparatus 331 is disposed to face a lower surface WSr of the workpiece W. The lower surface WSr is a surface facing downwardly (in the example illustrated in FIG. 3 and FIG. 4, a surface facing toward the -Z side). In this case, the heating apparatus 331 may heat the workpiece W through the lower surface WSr of the workpiece W. The heating apparatus 331 may heat the workpiece W by heating the lower surface WSr of the workpiece W.

However, the heating apparatus 331 may not be disposed under the workpiece W. The heating apparatus 331 may be disposed at any position as long as it can heat the workpiece W. For example, the heating apparatus 331 may be disposed on a lateral side of the workpiece W. Namely, the heating apparatus 331 may heat the workpiece W from the lateral side of the workpiece W. For example, the heating apparatus 331 may be located over the workpiece W. Namely, the heating apparatus 331 may heat the workpiece W from a position over the workpiece W.

The lower surface WSr of the workpiece W is a surface that is opposite to an upper surface WSu of the workpiece W. The upper surface WSu is a surface facing upwardly (in the example illustrated in FIG. 3 and FIG. 4, a surface facing toward the +Z side). As described above, the irradiation optical system 211 irradiates the workpiece W with the build light EL from the position above the workpiece W, and the material nozzle 212 supplies the build material M to the workpiece W from the position above the workpiece W. Therefore, the upper surface WSu is a surface which is irradiated with the build light EL is irradiated and to which the build material M is supplied. In this case, the heating apparatus 331 does not adversely affect the irradiation of the build light EL and the supply of the build material M, because the heating apparatus 331 heats the workpiece W through the lower surface WSr of the workpiece W. Namely, the build apparatus 2 can properly build the build object on the workpiece W even in a case where the heating support unit 33 including the heating apparatus 331 supports the workpiece W.

The heating apparatus 331 heats the workpiece W by contacting at least a part of the workpiece W. For example, in a case where the heating apparatus 331 is configured to heat the workpiece W from the position under the workpiece W as described above, the heating apparatus 331 may heat the workpiece W by contacting at least a part of the lower surface WSr of the workpiece W. For example, in a case where the heating apparatus 331 is configured to heat the workpiece W from the lateral side of the workpiece W as described above, the heating apparatus 331 may heat the workpiece W by contacting at least a part of a side surface of the workpiece W. In the below-described description, for convenience of description, an example in which the heating apparatus 331 heats the workpiece W by contacting at least a part of the lower surface WSr of the workpiece W will be described.

In a case where the heating apparatus 331 heats the workpiece W by contacting at least a part of the workpiece W, a heating apparatus that is configured to heat the workpiece W by contacting the workpiece W may be used as the heating apparatus 331. Alternatively, in a case where the heating apparatus 331 heats the workpiece W by contacting at least a part of the workpiece W, a heating apparatus that is configured to heat the workpiece W without contacting the workpiece W may be used as the heating apparatus 331.

However, the heating apparatus 331 may heat the workpiece W without contacting the workpiece W. For example, in a case where a heating apparatus that is configured to heat the workpiece W without contacting the workpiece W is used as the heating apparatus 331, the heating apparatus 331 may heat the workpiece W without contacting the workpiece W.

In a case where the heating apparatus 331 contacts at least a part of the workpiece W, a surface of the heating apparatus 331 that contacts at least a part of the workpiece W may be considered to serve as a heating surface 3311 for heating the workpiece W. In other words, the heating apparatus 331 may include the heating surface 3311 that contacts at least a part of the workpiece W. The heating surface 3311 is typically a surface (in other words, a part) of the heating apparatus 331 that can transfer the heat to the workpiece W. The heating surface 3311 may be a surface (in other words, a part) that can emit the heat transferred to the workpiece W. In this case, the heating apparatus 331 may heat the workpiece W through the heating surface 3311. However, even in a case where the heating apparatus 331 heats the workpiece W without contacting the workpiece W, the surface of the heating apparatus 331 that can transfer the heat to the workpiece W may be considered to serve as the heating surface 3311 for heating the workpiece W.

As described above, in the present example embodiment, the heating apparatus 331 heats the workpiece W by contacting at least a part of the lower surface WSr of the workpiece W. In this case, the heating apparatus 331 includes the heating surface 3311 that contacts at least a part of the lower surface WSr of the workpiece W. The heating surface 3311 is typically a surface that faces at least a part of the lower surface WSr of the workpiece W. The heating surface 3311 includes a surface facing upwardly (in the example illustrated in FIG. 3 and FIG. 4, a surface facing toward the +Z side and it may be referred to as an upper surface).

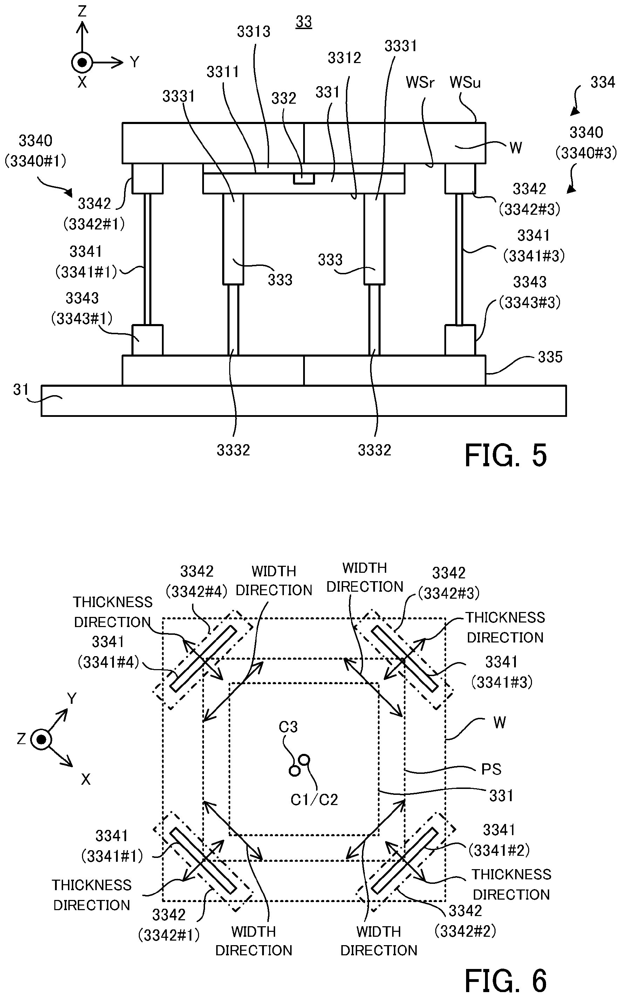

The heating apparatus 331 may contact at least a part of the workpiece W through a thermally conductive member 3313. Namely, the thermally conductive member 3313 may be disposed between the heating apparatus 331 and the workpiece W. Incidentally, FIG. 5 illustrates one example of the heating apparatus 331 that contacts at least a part of the workpiece W through the thermally conductive member 3313. In the present example embodiment, the heating surface 3311 that is the upper surface of the heating apparatus 331 contacts at least a part of the lower surface WSr of the workpiece W as described above. In this case, the heating surface 3311 of the heating apparatus 331 may contact at least a part of the lower surface WSr of the workpiece W through the thermally conductive member 3313. Namely, the thermally conductive member 3313 may be disposed between at least a part of the heating surface 3311 and at least a part of the lower surface WSr of the workpiece W.

The thermally conductive member 3313 is a member that can transfer the heat generated by the heating apparatus 331 to the workpiece W. In this case, the heating apparatus 331 may heat the workpiece W through the thermally conductive member 3313. The heating apparatus 331 may heat the workpiece W that contacts the thermally conductive member 3313 by heating the thermally conductive member 3313. The heating surface 3311 of the heating apparatus 331 may heat the lower surface WSr of the workpiece W through the thermally conductive member 3313. The heating surface 3311 may heat the lower surface WSr of the workpiece W that contacts the thermally conductive member 3313 by heating the thermally conductive member 3313. Thus, in a case where the thermally conductive member 3313 is disposed between the heating apparatus 331 and the workpiece W as described above, the heating apparatus 331 can efficiently heat the workpiece W even in a case where the heating apparatus 331 does not directly contact the workpiece W. In a case where the thermally conductive member 3313 is disposed between the heating apparatus 331 and the workpiece W as described above, the heating apparatus 331 may be considered to be in thermally contact with at least part of the workpiece W. Therefore, in the present example embodiment, "a state in which the heating apparatus 331 contacts at least a part of the workpiece W" may include not only "a state in which the heating apparatus 331 directly contacts at least a part of the workpiece W" but also "a state in which the heating apparatus 331 indirectly contacts at least a part of the workpiece W through other member such as the thermally conductive member 3313". "The state in which the heating apparatus 331 contacts at least a part of the workpiece W" may include "a state in which the heating apparatus 331 is in thermally contact with at least a part of the workpiece W through other member such as the thermally conductive member 3313".

The thermally conductive member 3313 may be typically a member whose thermal conductivity is higher than a thermal conductivity of air or the purge gas filling the chamber space 83IN. In this case, even in a case where a space (for example, a space with air or the purge gas) is formed between at least a part of the heating surface 3311 and at least a part of the lower surface WSr of the workpiece W, the heating apparatus 331 can efficiently heat the workpiece W through the thermally conductive member 3313 as long as the space is filled with the thermally conductive member 3313.

The thermally conductive member 3313 may be any member as long as it can transfer the heat generated by the heating apparatus 331 to the workpiece W. For example, the thermally conductive member 3313 may include at least one of a thermally conductive paste and a thermally conductive grease. Note that the thermally conductive grease is usable in a temperature range from -10 degrees Celsius to +800 degrees Celsius as an example.

Incidentally, there is a possibility that at least a part of the thermally conductive member 3313 evaporates when the thermally conductive member 3313 is heated. As a result, a gas containing the vaporized thermally conductive member 3313 is generated. There is a possibility that this gas affects the processing of the workpiece W. Therefore, this gas may be collected from non-illustrated collection port. Moreover, a supply port for supplying a gas that forms an air flow for guiding the gas to the collection port may be formed in the stage apparatus 3. In this case, since the space between a plurality of support members 3340 is an open space, the open space may be used as an opening (space) for collecting the gas and a space for supplying the gas from the supply port. Moreover, the thermally conductive member 3313 may be disposed in a sealed space separated from a processing space in which the workpiece W exists. In this case, there is a lower possibility that the above-described gas flows into the processing space.

The temperature sensor 332 is a temperature detection apparatus that is configured to detect a temperature of the workpiece W. For example, the temperature sensor 332 may be configured to detect the temperature of a part of the workpiece W that is heated by the heating apparatus 331. For example, the temperature sensor 332 may be configured to detect the temperature of the lower surface WSr of the workpiece W that is heated by the heating apparatus 331. For example, the temperature sensor 332 may be configured to detect the temperature of a part of the workpiece W that is irradiated with the build light EL by the build apparatus 2. The temperature sensor 332 may be any apparatus as long as it is configured to detect the temperature of the workpiece W. For example, the temperature sensor 332 may include a thermocouple.

The force applying apparatus 333 is an apparatus that is configured to apply a force acting on the heating apparatus 331. The force applying apparatus 333 is an apparatus that is configured to apply a force to the heating apparatus 331. Specifically, the force applying apparatus 333 is an apparatus that is configured to apply, to the heating apparatus 331, a force that acts to push the heating apparatus 331 toward the workpiece W. The force applying apparatus 333 is an apparatus that is configured to apply, to the heating apparatus 331, a force that acts from the heating apparatus 331 toward the workpiece W.

As described above, the heating apparatus 331 is disposed under the workpiece W. In this case, the force applying apparatus 333 may apply, to the heating apparatus 331, a force that acts upwardly. The force applying apparatus 333 may apply, to the heating apparatus 331, a force that acts to push the heating apparatus 331 upwardly from below. The force applying apparatus 333 may apply a force that acts to push the heating apparatus 331 toward the lower surface WSr of the workpiece W.

In a case where the force applying apparatus 333 applies, to the heating apparatus 331, the force that acts to push the heating apparatus 331 upwardly from below, the force applying apparatus 333 may apply the force to the heating apparatus 331 from a position under the heating apparatus 331. Namely, the force applying apparatus 333 may apply the force to the heating apparatus 331 from the position under the heating apparatus 331. Specifically, the force applying apparatus 333 may apply the force to the lower surface 3312 of the heating apparatus 331. The force applying apparatus 333 may apply, to a lower surface 3312 of the heating apparatus 331, the force that acts to push the heating apparatus 331 upwardly from below. The lower surface 3312 includes a surface that is opposite to the heating surface 3311 that is the upper surface of the heating apparatus 331.

The force applying apparatus 333 may be configured to apply the force to the heating apparatus 331 by contacting the heating apparatus 331. In this case, a point at which the force applying apparatus 333 contacts the heating apparatus 331 may be considered to serve as a point of action at which the force applied by the force applying apparatus 333 acts on the heating apparatus 331. For example, in a case where the force applying apparatus 333 applies the force to the lower surface 3312 of the heating apparatus 331 as described above, the force applying apparatus 333 may be configured to apply the force to the heating apparatus 331 by contacting the lower surface 3312 of the heating apparatus 331. In this case, the point at which the force applying apparatus 333 contacts the lower surface 3312 of the heating apparatus 331 may be considered to serve as the point of action at which the force applied by the force applying apparatus 333 acts on the heating apparatus 331. In the below-described description, for convenience of description, an example in which the force applying apparatus 333 contacts the lower surface 3312 of the heating apparatus 331 will be described. However, the force applying apparatus 333 may be configured to apply the force to the heating apparatus 331 without contacting the heating apparatus 331.

The force applying apparatus 333 may be any apparatus as long as it is configured to apply the force to the heating apparatus 331. As one example, the force applying apparatus 333 may be an apparatus that is configured to apply the force to the heating apparatus 331 by using an elastic member. In this case, the force applying apparatus 333 may include the elastic member. At least one of a spring and a compression coil is one example of the elastic member.

The force applying apparatus 333 is supported by the cooling apparatus 335 that is configured to serve as a base member for supporting the force applying apparatus 333. The cooling apparatus 335 may support the force applying apparatus 333 from a position under the force applying apparatus 333. Specifically, the force applying apparatus 333 may be disposed on the cooling apparatus 335. In this case, a point at which the cooling apparatus 335 supports the force applying apparatus 333 (namely, a point at which the force applying apparatus 333 contacts the cooling apparatus 335) may be considered to serve as a pivot point that keeps the force applying apparatus 333 stationary. However, the force applying apparatus 333 may be supported by a support member (for example, the stage 31) that is different from the cooling apparatus 335.

The force applying apparatus 333 may have a shape that extends along a first extending direction (for example, the Z-axis direction in the example illustrated in FIG. 3 and FIG. 4) that is directed from the cooling apparatus 335 supporting the force applying apparatus 333 toward the heating apparatus 331 to which the force applying apparatus 333 applies the force. In this case, the force applying apparatus 333 may be configured to apply the force to the heating apparatus 331 by contacting the heating apparatus 331 through a first end part 3331 (for example, an end part on the +Z side in the example illustrated in FIG. 3) that is one end of the force applying apparatus 333 in the first extending direction. The force applying apparatus 333 may be supported by the cooling apparatus 335 by contacting or being connected to the cooling apparatus 335 through a second end part 3332 (for example, an end part on the -Z side in the example illustrated in FIG. 3 and FIG. 4) that is the other end of the force applying apparatus 333 in the first extending direction . The second end part 3332 is a part of the force applying apparatus 333 located at a position that is farther from the heating apparatus 331 than the first end part 3331 is in the first extending direction. The second end part 3332 is a part of the force applying apparatus 333 that is located on an opposite side of the first end part 3331.

The heating support unit 33 may include a single force applying apparatus 333. The heating support unit 33 may include a plurality of force applying apparatuses 333. In the example illustrated in FIG. 4, the heating support unit 33 include four force applying apparatuses 333.

In a case where the heating support unit 33 include the plurality of force applying apparatuses 333, the plurality of force applying apparatuses 333 may be disposed so that the forces applied to the heating apparatus 331 from the plurality of force applying apparatuses 333 are not biased locally. In the example illustrated in FIG. 4, the four force applying apparatuses 333 are disposed in a 2 × 2 matrix arrangement at regular intervals.

Incidentally, in a case where the thermally conductive member 3313 is disposed between the heating apparatus 331 and the workpiece W as described above, the force applying apparatus 333 may be regarded as an apparatus that is configured to apply, to the heating apparatus 331, the force that acts to push the heating apparatus 331 toward the thermally conductive member 3313. The force applying apparatus 333 may be regarded as an apparatus that is configured to apply, to the heating apparatus 331, the force that acts in a direction directed from the heating apparatus 331 toward the thermally conductive member 3313. Even in this case, the force applying apparatus 333 is configured to apply, to the heating apparatus 331, the force that acts to push the heating apparatus 331 toward the workpiece W by applying, to the heating apparatus 331, the force that acts to push the heating apparatus 331 toward the thermally conductive member 3313. Therefore, in the present example embodiment, a state in which "the force applying apparatus 333 applies, to the heating apparatus 331, the force that acts to push the heating apparatus 331 toward the workpiece W" may include not only a state in which "the force applying apparatus 333 applies, to the heating apparatus 331, the force that acts to push the heating apparatus 331 toward the workpiece W under a situation where the thermally conductive member 3313 is not disposed between the heating apparatus 331 and the workpiece W" but also a state in which "the force applying apparatus 333 applies, to the heating apparatus 331, the force that acts to push the heating apparatus 331 toward the thermally conductive member 3313 (thereby, to push the heating apparatus 331 toward the workpiece W) under a situation where the thermally conductive member 3313 is disposed between the heating apparatus 331 and the workpiece W".

The support apparatus 334 is an apparatus that is configured to support the workpiece W. The support apparatus 334 supports the workpiece W from a position under it. The support apparatus 334 supports the workpiece W from the position under it through the lower surface WSr of the workpiece W. The support apparatus 334 supports the workpiece W from the position under it by contacting the lower surface WSr of the workpiece W.

In order to support the workpiece W, the support apparatus 334 includes the plurality of support members 3340. Each support member 3340 supports the workpiece W from the position under it. Each support member 3340 supports the workpiece W from the position under it through the lower surface WSr of the workpiece W. Each support member 3340 supports the workpiece W from the position under it by contacting the lower surface WSr of the workpiece W.

The number of support members 3340 of the support apparatus 334 is set to a number that allows the support apparatus 334 to stably support the workpiece W by using the plurality of support members 3340. In order to realize a state in which the support apparatus 334 can stably support the workpiece W by using the plurality of support members 3340, the support apparatus 334 may include three or more support members 3340. In the example illustrated in FIG. 4, the support apparatus 334 includes four support members 3340 (specifically, the support member 3340#1, the support member 3340#2, the support member 3340#3, and the support member 3340#4). In this case, the support apparatus 334 can stably support the workpiece W by using the four support members 3340. However, even in a case where the support apparatus 334 includes three support members 3340, the support apparatus 334 can stably support the workpiece W by using the three support members 3340. Even in a case where the support apparatus 334 includes five or more support members 3340, the support apparatus 334 can stably support the workpiece W by using the five or more support members 3340. However, there is a possibility that an increase of the number of support members 3340 of the support apparatus 334 leads to an increase of a cost of the support apparatus 334. Therefore, the number of support members 3340 of the support apparatus 334 may be three or four.

The plurality of support members 3340 may be disposed so as to realize the state in which the support apparatus 334 can stably support the workpiece W by using the plurality of support members 3340. In the example illustrated in FIG. 4, the four support members 3340#1 to 3340#4 are disposed in a 2 × 2 matrix arrangement at regular intervals. Furthermore, in the example illustrated in FIG. 4, the four support members 3340#1 to 3340#4 are disposed at or near four corners of the workpiece W, whose cross-sectional shape along the XY plane is a rectangular shape, respectively.

Each support member 3340 includes a support part 3341, a connecting part 3342, and a connecting part 3343. In the below-described description, the support part 3341, the connecting part 3342, and connecting part 3343 provided by support member 3340#k (wherein, k is a variable number representing 1, 2, 3, or 4) are referred to as a support part 3341#k, a connecting part 3342#k, and a connecting part 3343#k, respectively, as necessary.

The support part 3341 is a member for supporting the workpiece W from the position under the workpiece W. Specifically, the support part 3341 is connected to the workpiece W through the connecting part 3342 that contacts the workpiece W (for example, the lower surface WSr of the workpiece W). As a result, the support part 3341 supports the workpiece W through the connecting part 3342.

In a case where the support part 3341 supports the workpiece W from the position under the workpiece W, a weight of the workpiece W is applied to the support part 3341 that supports the workpiece W. In this case, a strength of the support part 3341 may be a strength that does not allow the support part 3341 to be deformed or buckled by the weight of the workpiece W. A stiffness of the support part 3341 may be a stiffness that does not allow the support part 3341 to be deformed or buckled by the weight of the workpiece W.

The connecting part 3342, which contacts the workpiece W, holds the workpiece W. For this purpose, the connecting part 3342 may include at least one of a mechanical chuck, an electrostatic chuck, and a vacuum suction chuck to hold the workpiece W. However, the connecting part 3342 may not be configured to hold the workpiece W.

The support part 3341 is supported by the cooling apparatus 335 that is configured to serve as a base member for supporting the support part 3341. Specifically, the support part 3341 is connected to the cooling apparatus 335 through the connecting part 3343 that contacts the cooling apparatus 335. The cooling apparatus 335 may support the support part 3341 from ta position under the support part 3341. As a result, the cooling apparatus 335 may support the support member 3340 from a position under the support member 3340 including the support part 3341. In this case, the support member 3340 may be considered to be disposed on the cooling apparatus 335.

The support part 3341 may have a shape that extends along a second extending direction (for example, the Z-axis direction in the example illustrated in FIG. 3 and FIG. 4) that is directed from the cooling apparatus 335 supporting the support part 3341 toward the workpiece W supported by the support part 3341. In this case, the support part 3341 may be configured to support the workpiece W by contacting the workpiece W through the connecting part 3342 (especially through an upper part of the connecting part 3342 facing upwardly) that is one end of the support member 3340 in the second extending direction. The support part 3341 may be supported by the cooling apparatus 335 by contacting the cooling apparatus 335 through the connecting part 3343 (for example, the end part on the -Z side in the example illustrated in FIG. 3 and FIG. 4) that is the other end of the support member 3340 in the second extending direction. The connecting part 3343 is a part located at a position that is farther from the workpiece W than the connecting part 3342 (especially, than the upper part of the connecting part 3342 that contacts the workpiece W) is in the second extending direction. The connecting part 3343 is a part that is located on opposite side of the connecting part 3342 (especially, the upper part of the connecting part 3342 that contacts the workpiece W) relative to the support part 3341.

The support part 3341 may be a member that satisfies a predetermined stiffness condition. The stiffness condition may include a condition that a stiffness of the support part 3341 in a first stiffness direction is lower than a stiffness of the support part 3341 in a second stiffness direction. The second stiffness direction may be a direction that intersects the first stiffness direction. Furthermore, the second stiffness direction may be a direction that intersects a plane including the plurality of connecting parts 3342 included in the plurality of support members 3340, respectively. In the example illustrated in FIG. 3 and FIG. 4, the plane including the connecting parts 3342#1 to 3342#4 is a plane along the XY plane. Therefore, the second stiffness direction may be a direction (for example, the Z-axis direction) that intersects the XY plane. The first stiffness direction may be a direction along the XY plane.

The support part 3341 that satisfies the above-described stiffness condition may satisfy a size condition that a size in the first stiffness direction (for example, along the XY plane) is smaller than a size in the second stiffness direction (for example, in the Z-axis direction). Conversely, the support part 3341 that satisfies the size condition is more likely to satisfy the above-described stiffness condition than the support part 3341 that does not satisfy the size condition. This is because the stiffness of an object in one direction is lower as the size of the object in the one direction is smaller.

A plate spring that is a thin plate member is one example of the support part 3341 that satisfies the stiffness condition and the size condition. In the below-described description, for convenience of description, an example in which the support part 3341 is the plate spring will be described. However, the support part 3341 is not limited to the plate spring. The support part 3341 may include a member that is different from the plate spring. For example, the plate spring is one type of elastic member. Therefore, the support part 3341 may include an elastic member that is different from the plate spring. The support part 3341 may include an elastic member that satisfies the above-described stiffness condition. The support part 3341 may include an elastic member that satisfies the above-described size condition.

The plate spring typically has a characteristic that a stiffness of the plate spring in a thickness direction is lower than a stiffness of the plate spring in each of a width direction and a length direction. Therefore, in a case where the support part 3341 is the plate spring, the thickness direction of the plate spring may be used as the above-described first stiffness direction, and either one of the width direction and the length direction of the plate spring may be used as the above-described second stiffness direction.

Incidentally, the length direction of the plate spring may mean a longitudinal direction of the plate spring (namely, a direction along which the plate spring is extended). In the example illustrated in FIG. 3 and FIG. 4, the support part 3341 that is the plate spring extends along the Z-axis direction (namely, the second extending direction that extends from the cooling apparatus 335 supporting the support part 3341 toward the workpiece W supported by the support part 3341). Therefore, in the example illustrated in FIG. 3 and FIG. 4, the length direction of the plate spring is the Z-axis direction. Namely, in the example illustrated in FIG. 3 and FIG. 4, the length direction of the plate spring is used as the second stiffness direction. Moreover, the width direction of the plate spring may mean a direction having a larger size in the cross-section of the plate spring that intersects the longitudinal direction of the plate spring. The thickness direction of the plate spring may mean a direction having a smaller size in the cross-section of the plate spring that intersects the longitudinal direction of the plate spring.

The plurality of support parts 3341 may be disposed so that the thickness direction (namely, the first stiffness direction) of the plate spring constituting each support part 3341 satisfies a predetermined direction condition illustrated in FIG. 6. Next, with reference to FIG. 6, the direction condition will be described. FIG. 6 is a cross-sectional view that illustrates disposed positions of the plurality of support parts 3341.

As illustrated in FIG. 6, the direction condition may include a first condition that the thickness direction (namely, the first stiffness direction) of the plate spring constituting each support part 3341 is a direction directed from a center C1 of the lower surface WSr of the workpiece W toward the connecting part 3342 for connecting each support part 3341 to the workpiece W. For example, the first condition may include a condition that the thickness direction (namely, the first stiffness direction) of the plate spring constituting the support part 3341#1 is a direction directed from the center C1 toward the connecting part 3342#1 (specifically, a direction directed from the center C1 toward the -Y side). For example, the first condition may include a condition that the thickness direction (namely, the first stiffness direction) of the plate spring constituting the support part 3341#2 is a direction directed from the center C1 toward the connecting part 3342#2 (specifically, a direction directed from the center C1 toward the +X side). For example, the first condition may include a condition that the thickness direction (namely, the first stiffness direction) of the plate spring constituting the support part 3341#3 is a direction directed from the center C1 toward the connecting part 3342#3 (specifically, a direction directed from the center C1 toward the +Y side). For example, the first condition may include a condition that the thickness direction (namely, the first stiffness direction) of the plate spring constituting the support part 3341#4 is a direction directed from the center C1 toward the connecting part 3342#4 (specifically, a direction directed from the center C1 toward the -X side).

As illustrated in FIG. 6, the direction condition may include a second condition that the thickness direction (namely, the first stiffness direction) of the plate spring constituting each support part 3341 is a direction directed from a center of gravity C2 of a polygon PS connecting the plurality of connecting parts 3342 of the support apparatus 334 toward the connecting part 3342 for connecting each support part 3341 to the workpiece W. For example, the second condition may include a condition that the thickness direction (namely, the first stiffness direction) of the plate spring constituting the support part 3341#1 is a direction directed from the center of gravity C2 toward the connecting part 3342#1 (specifically, from the center of gravity C2 toward the -Y side). For example, the second condition may include a condition that the thickness direction (namely, the first stiffness direction) of the plate spring constituting the support part 3341#2 is a direction directed from the center of gravity C2 toward the connecting part 3342#2 (specifically, from the center of gravity C2 toward the +X side). For example, the second condition may include a condition that the thickness direction (namely, the first stiffness direction) of the plate spring constituting the support part 3341#3 is a direction directed from the center of gravity C2 toward the connecting part 3342#3 (specifically, from the center of gravity C2 toward the +Y side). For example, the second condition may include a condition that the thickness direction (namely, the first stiffness direction) of the plate spring constituting the support part 3341#4 is a direction directed from the center of gravity C2 toward the connecting part 3342#4 (specifically, from the center of gravity C2 toward the -X side). Incidentally, FIG. 6 illustrates an example in which the polygon PS has an outer shape that is smaller than an outer shape of the workpiece W and the center C1 coincides with the center of gravity C2. However, the polygon PS may not be smaller than the outer shape of the workpiece W, and the center C1 may not coincide with the center of gravity C2.

As illustrated in FIG. 6, the direction condition includes a second condition that the thickness direction (namely, the first stiffness direction) of the plate spring constituting each support part 3341 is a direction directed from a predetermined point C3 inside the polygon PS connecting the plurality of connecting parts 3342 of the support apparatus 334 toward the connecting part 3342 for connecting each support part 3341 to the workpiece W. For example, the second condition may include a condition that the thickness direction (namely, the first stiffness direction) of the plate spring constituting the support part 3341#1 is a direction directed from the point C3 toward the connecting part 3342#1 (specifically, from the point C3 toward the -Y side). For example, the second condition may include a condition that the thickness direction (namely, the first stiffness direction) of the plate spring constituting the support part 3341#2 is a direction directed from the point C3 toward the connecting part 3342#2 (specifically, from the point C3 toward the +X side). For example, the second condition may include a condition that the thickness direction (namely, the first stiffness direction) of the plate spring constituting the support part 3341#3 is a direction directed from the point C3 toward the connecting part 3342#3 (specifically, from the point C3 toward the +Y side). For example, the second condition may include a condition that the thickness direction (namely, the first stiffness direction) of the plate spring constituting the support part 3341#4 is a direction directed from the point C3 toward the connecting part 3342#4 (specifically, from the point C3 toward the -X side).

Incidentally, in a case where the polygon PS connecting the plurality of connecting parts 3342 of the support apparatus 334 is defined as described above, the above-described heating apparatus 331 may be typically located inside the polygon PS, as illustrated in FIG. 6. However, at least a part of the heating apparatus 331 may be located outside the polygon PS.

Again in FIG. 3 and FIG. 4, the cooling apparatus 335 is an apparatus that is configured to cooling target object. For example, the cooling apparatus 335 may include an air-cooling apparatus that is configured to cool the cooling target object by using gas as a refrigerant. For example, the cooling apparatus 335 may include a water-cooling apparatus that is configured to cool the cooling target object by using liquid as a refrigerant. As one example, the cooling apparatus 335 may include a chiller that is configured to cool the cooling target object by circulating the refrigerant including at least one of the gas and the liquid.

The cooling target object may include the force applying apparatus 333. In this case, the cooling apparatus 335 may cool the force applying apparatus 333. Specifically, the force applying apparatus 333 is supported by the cooling apparatus 335 by contacting the cooling apparatus 335 through the second end part 3332 (for example, the end part on the -Z side in the examples illustrated in FIG. 3 and FIG. 4) of the force applying apparatus 333, as described above. In this case, the cooling apparatus 335 may cool the force applying apparatus 333 through the second end part 3332. The cooling apparatus 335 may cool the force applying apparatus 333 by cooling the second end part 3332.

The cooling target object may include the support apparatus 334. In this case, the cooling apparatus 335 may cool the support apparatus 334. Specifically, the support apparatus 334 is supported by the cooling apparatus 335 by contacting the cooling apparatus 335 through the connecting part 3343, as described above. In this case, the cooling apparatus 335 may cool the support apparatus 334 through the connecting part 3343. The cooling apparatus 335 may cool the support apparatus 334 by cooling the connecting part 3343.

In the present example embodiment, heat from the workpiece W (typically heat transferred from the heating support unit 33 to the workpiece W) is transferred to the second end part 3332 through the support apparatus 334, however, an amount of the heat transferred to the second end part 3332 is small, because a cross-sectional area (a cross-sectional area in the plane intersecting a longitudinal direction of the support part 3331) of each support part 3331 of the support apparatus 334 is reduced to thereby increase a thermal resistance of the support apparatus 334. Therefore, the cooling apparatus 335 enables efficient cooling.

The cooling apparatus 335 may be placed on the stage 31. In this case, the cooling apparatus 335 may cool the stage 31. Namely, the cooling target object may be the stage 31.

### (2-2) State of Heating Support Unit 33 in period during which Build Apparatus 2 builds build object on workpiece W

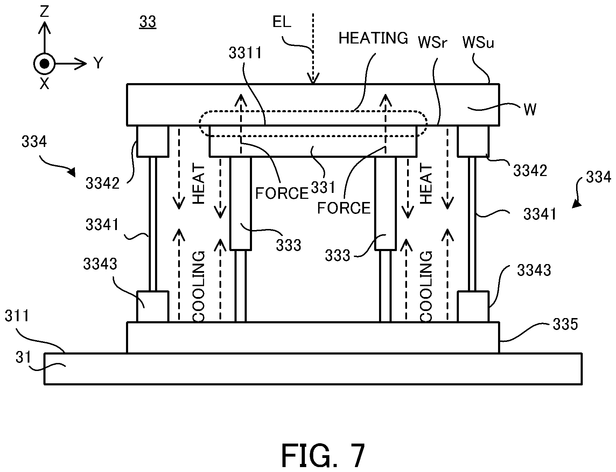

Next, with reference to FIG. 7, a state of the heating support unit 33 in a build period during which the build apparatus 2 builds the build object on the workpiece W will be described. FIG. 7 is a cross-sectional view that illustrates the state of the heating support unit 33 in the build period during which the build apparatus 2 builds the build object on the workpiece W.

As illustrated in FIG. 7, in at least a part of the build period during which the build apparatus 2 builds the build object on the workpiece W, the build apparatus 2 irradiates the workpiece W with the build light EL. For example, in a case where the build apparatus 2 builds, as the build object, the 3D structural object corresponding to an aggregation of the plurality of structural layers by building the plurality of structural layers in sequence, the build apparatus 2 irradiates the workpiece W with the build light EL when a first structural layer that constitutes the 3D structural object is built. Specifically, the build apparatus 2 irradiates the upper surface WSu of the workpiece W with the build light EL. As a result, the upper surface WSu of the workpiece W is heated by the build light EL.

Furthermore, when the build apparatus 2 builds another structural layer on one structural layer that constitutes the 3D structural object, the build apparatus 2 irradiates the one structural layer with the build light EL. As a result, there is a possibility that heat transferred from the build light EL to the one structural layer is transferred to the workpiece W through the one structural layer. As a result, the upper surface WSu of the workpiece W is heated by the build light EL.

Here, if the heating apparatus 331 of the heating support unit 33 does not heat the lower surface WSr of the workpiece W, there is a possibility that temperature of the upper surface WSu of the workpiece W heated by the build light EL is significantly different from the temperature of the lower surface WSr of the workpiece W that is not heated by the build light EL. Namely, there is a possibility that a relatively large temperature gradient occurs between the upper surface WSu of the workpiece W heated by the build light EL and the lower surface WSr of the workpiece W that is not heated by the build light EL. As a result, there is a possibility that the workpiece W is deformed. For example, there is a possibility that the workpiece W is deformed to warp.

Therefore, in the present example embodiment, the heating apparatus 331 heats the lower surface WSr of the workpiece W under the control of the control apparatus 7. Specifically, the heating apparatus 331 heats the lower surface WSr of the workpiece W so that the difference between the temperature of the upper surface WSu of the workpiece W and the temperature of the lower surface WSr of the workpiece W is smaller (namely, the temperature gradient becomes gradual), compared to a case where the heating apparatus 331 does not heat the lower surface WSr of the workpiece W. As a result, there is a lower possibility that the workpiece W is deformed, compared to the case where the heating apparatus 331 does not heat the lower surface WSr of the workpiece W. Therefore, the heating support unit 33 can reduce the deformation of the workpiece W by heating the lower surface WSr of the workpiece W in at least a part of the build period.

In this case, the control apparatus 7 may control the heating apparatus 331 based on the temperature of the workpiece W detected by the temperature sensor 332. For example, in a case where the temperature sensor 332 is configured to detect the temperatures of the upper surface WSu and the lower surface WSr of the workpiece W, as described above, the control apparatus 7 may control the heating apparatus 331 based on the temperature of the upper surface WSu of the workpiece W detected by the temperature sensor 332 and the temperature of the lower surface WSr of the workpiece W detected by the temperature sensor 332. For example, as described above, in a case where the temperature sensor 332 is configured to detect the temperature of the lower surface WSr of the workpiece W but is not configured to detect the temperature of the upper surface WSu of the workpiece W, the control apparatus 7 may control the heating apparatus 331 so that the difference between the temperature of the lower surface WSr of the workpiece W detected by the temperature sensor 332 and a target temperature is smaller. The target temperature may be the temperature of the upper surface WSu of the workpiece W that is expected when the build apparatus 2 irradiates the upper surface WSu of the workpiece W with the build light EL. One example of the target temperature is several hundred degrees Celsius (for example, 600 degrees Celsius).

In at least a part of a period during which the heating apparatus 331 heats the workpiece W (alternatively, the build period), the force applying apparatus 333 may apply, to the heating apparatus 331, the force that acts to push the heating apparatus 331 toward the workpiece W. In this case, there is a lower possibility that the heating apparatus 331 does not contact the workpiece W, compared to a case where the force applying apparatus 333 does not apply the force. Specifically, there is a lower possibility that the heating surface 3311 does not contact the workpiece W. As a result, there is a higher possibility that the heating apparatus 331 adheres to at least a part of the workpiece W, compared to the case where the force applying apparatus 333 does not apply the force. Specifically, there is a higher possibility that the heating surface 3311 adheres to at least a part of the lower surface WSr of the workpiece W. Therefore, in a case where the force applying apparatus 333 applies the force, there is a higher possibility that a size of an area at which the heating surface 3311 contacts the lower surface WSr of the workpiece W is larger, compared to the case where the force applying apparatus 333 does not apply the force. Namely, there is a possibility that a size of the area of a surface part of the heating surface 3311 that contacts the lower surface WSr of the workpiece W is larger. Moreover, since there is a higher possibility that the heating surface 3311 adheres to at least a part of the lower surface WSr of the workpiece W, a difference between a shape of the heating surface 3311 and a shape of the lower surface WSr of the workpiece W is smaller at a boundary between the heating surface 3311 and the lower surface WSr of the workpiece W in a case where the force applying apparatus 333 applies the force, compared to the case where the force applying apparatus 333 does not apply the force. Here, the amount of the heat transferred from the heating surface 3311 to the lower surface WSr of the workpiece W per unit time is larger as the size of the area at which the heating surface 3311 contacts the lower surface WSr of the workpiece W is larger and / or the difference between the shape of the heating surface 3311 and the shape of the lower surface WSr of the workpiece W is smaller. Therefore, in a case where the force applying apparatus 333 applies the force, the amount of the heat transferred from the heating surface 3311 to the lower surface WSr of the workpiece W per unit of time is larger, compared to the case where the force applying apparatus 333 does not apply the force. As a result, in a case where the force applying apparatus 333 applies the force, the heating apparatus 331 can heat the workpiece W more efficiently, compared to the case where the force applying apparatus 333 does not apply the force.

Incidentally, the same can be applied in a case where the thermally conductive member 3313 is disposed between the heating apparatus 331 and the workpiece W. Specifically, there is a higher possibility that the heating surface 3311 adheres to at least a part of the thermally conductive member 3313. As a result, there is a higher possibility that the thermally conductive member 3313 adheres to at least a part of the lower surface WSr of the workpiece W. Therefore, in a case where the force applying apparatus 333 applies the force, there is a higher possibility that a size of an area at which the thermally conductive member 3313 contacts the lower surface WSr of the workpiece W is larger, compared to the case where the force applying apparatus 333 does not apply the force. Moreover, since there is a higher possibility that the thermally conductive member 3313 adheres to at least a part of the lower surface WSr of the workpiece W, a difference between a shape of the thermally conductive member 3313 and the shape of the lower surface WSr of the workpiece W is smaller at a boundary between the thermally conductive member 3313 and the lower surface WSr of the workpiece W in a case where the force applying apparatus 333 applies the force, compared to the case where the force applying apparatus 333 does not apply the force. Here, the amount of the heat transferred from the heating surface 3311 to the lower surface WSr of the workpiece W through the thermally conductive member 3313 per unit time is larger as the size of the area at which the thermally conductive member 3313 contacts the lower surface WSr of the workpiece W is larger and / or the difference between the shape of the thermally conductive member 3313 and the shape of the lower surface WSr of the workpiece W is smaller. Therefore, in a case where the force applying apparatus 333 applies the force, the amount of the heat transferred from the heating surface 3311 to the lower surface WSr of the workpiece W through the thermally conductive member 3313 per unit of time is larger, compared to the case where the force applying apparatus 333 does not apply the force. As a result, in a case where the force applying apparatus 333 applies the force, the heating apparatus 331 can heat the workpiece W more efficiently, compared to the case where the force applying apparatus 333 does not apply the force.

However, in a case where the force applied by the force applying apparatus 333 to the heating apparatus 331 is too large than necessary, there is a possibility that the workpiece W is separated from the support member 3340 that supports the workpiece W (especially, the connecting part 3342 that contacts the workpiece W and holds it). As a result, there is a possibility that a technical problem that the support apparatus 334 is unable to support the workpiece W arises. Therefore, in order to solve this technical problem, a force with which the support apparatus 334 supports the workpiece W (for example, a force with which the connecting part 3342 holds the workpiece W) may be stronger than the force applied by the force applying apparatus 333 to the heating apparatus 331. In this case, the support apparatus 334 can properly support the workpiece W even in a case where the force applying apparatus 333 applies the force to the heating apparatus 331. Namely, the workpiece W is fixed by the support apparatus 334 even in a case where the force applying apparatus 333 applies the force to the heating apparatus 331. In other words, even in a case where the force applying apparatus 333 applies the force to the heating apparatus 331, the workpiece W is not moved upwardly by the force applied by the force applying apparatus 333 to the heating apparatus 331.

In a case where the force applying apparatus 333 applies the force to the heating apparatus 331 in a situation where the heating apparatus 331 heats the lower surface WSr of the workpiece W, there is a possibility that the heat generated by the heating apparatus 331 is transferred to the force applying apparatus 333 that applies the force to the heating apparatus 331. This is because, the force applying apparatus 333 contacts the heating apparatus 331 as described above. As a result, there is a possibility that the force applying apparatus 333 is affected by the heat. For example, there is a possibility that the force applying apparatus 333 is deformed by the heat. In the present example embodiment, however, the cooling apparatus 335 cools the force applying apparatus 333. Therefore, there is a lower possibility that the force applying apparatus 333 is affected by the heat, compared to a case where the cooling apparatus 335 does not cool the force applying apparatus 333. Therefore, the force applying apparatus 333 can properly apply the force to the workpiece W without being affected by the heat generated by the heating apparatus 331. The force applying apparatus 333 can properly apply the force to the workpiece W in a state where an influence of the heat generated by the heating apparatus 331 is reduced.

Moreover, in a case where the heating apparatus 331 heats the lower surface WSr of the workpiece W, there is a possibility that the heat generated by the heating apparatus 331 is transferred through the workpiece W to the support apparatus 334 that supports the workpiece W. This is because, the support apparatus 334 contacts the heating apparatus 331 as described above. As a result, there is a possibility that the support apparatus 334 is affected by the heat. For example, there is a possibility that the support apparatus 334 is deformed by the heat. In the present example embodiment, however, the cooling apparatus 335 cools the support apparatus 334. Therefore, there is a lower possibility that the support apparatus 334 is affected by the heat, compared to a case where the cooling apparatus 335 does not cool the support apparatus 334. Therefore, the support apparatus 334 can properly support the workpiece W without being affected by the heat generated by the heating apparatus 331. The support apparatus 334 can properly support the workpiece W in a state where the influence of the heat generated by the heating apparatus 331 is reduced.

Moreover, since the cross-sectional area (the cross-sectional area in the plane intersecting the longitudinal direction of the support part 3331) of each support part 3331 of the support apparatus 334 is reduced to thereby increase the thermal resistance of the support apparatus 334 as described above, the amount of the heat transferred from the heated workpiece W to the support apparatus 334 is small, that is, a temperature distribution in the workpiece W can be made closer to uniform by reducing the temperature gradient between a part contacting the heating apparatus 33 that is a heat input area and the connecting part 3342 that is a heat output area.

Moreover, since the cooling apparatus 335 is placed on the stage 31 and the cooling apparatus 335 supports the force applying apparatus 333 and the support apparatus 334, the heat generated by the heating apparatus 331 is less likely to be transferred to the stage 31 through the force applying apparatus 333 and the support apparatus 334. In this case, the cooling apparatus 335 may be considered to serve as a thermally insulating apparatus that prevents the heat generated by the heating apparatus 331 from being transferred to the stage 31. Therefore, the stage 31 can support the workpiece W without being affected by the heat generated by the heating apparatus 331. For example, the stage 31 can support the workpiece W without being deformed by the heat generated by the heating apparatus 331.

Moreover, since the heat generated by the heating apparatus 331 is less likely to be transferred to the stage 31, the heat generated by the heating apparatus 331 is less likely to be transferred to an apparatus located under the stage 31. Therefore, the apparatus located under the stage 31 can operate properly without being affected by the heat generated by the heating apparatus 331. For example, in a case where the stage driving system 32 is disposed under the stage 31, the heat generated by the heating apparatus 331 is less likely to be transferred to the stage driving system 32. Therefore, the stage driving system 32 can move the stage 31 properly without being affected by the heat generated by the heating apparatus 331.

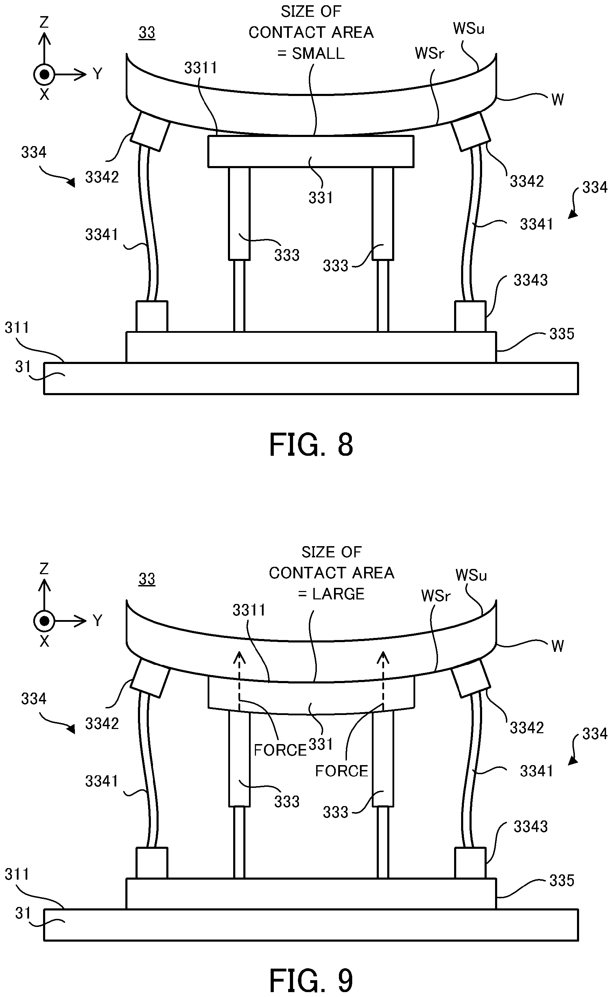

On the other hand, although there is a low possibility that workpiece W is deformed because the heating apparatus 331 heats the lower surface WSr of the workpiece W as described above, there is a possibility that the workpiece W is deformed in some cases. In this case, if the force applying apparatus 333 does not apply, to the heating apparatus 331, the force that acts to push the heating apparatus 331 toward the workpiece W, there is a possibility that a gap is formed between the lower surface WSr of the deformed workpiece W and the heating surface 3311 as illustrated in FIG. 8 that is a cross-sectional view illustrating a state of the heating support unit 33 supporting the deformed workpiece W. Namely, there is a possibility that the shape of the lower surface WSr of the deformed workpiece W is different from the shape of the heating surface 3311. As a result, there is a possibility that the amount of the heat transferred from the heating surface 3311 to the lower surface WSr of the workpiece W per unit time is reduced. As a result, there is a possibility that the heating apparatus 331 is unable to heat the workpiece W efficiently.

In the present example embodiment, however, even in a situation where the workpiece W is deformed, the force applying apparatus 333 may apply, to the heating apparatus 331, the force that acts to push the heating apparatus 331 toward the workpiece W, as described above. As a result, as illustrated in FIG. 9 that is a cross-sectional view illustrating the state of the heating support unit 33 supporting the deformed workpiece W, there is a high possibility that the heating surface 3311 keeps contacting the workpiece W. Specifically, the force applying apparatus 333 may deform the heating apparatus 331 (especially, the heating surface 3311) to match the deformed workpiece W by using the force applied to the heating apparatus 331 in a case where the workpiece W is deformed. For example, as illustrated in FIG 9, the force applying apparatus 333 may move the heating apparatus 331 (especially, the heating surface 3311) upwardly in a case where the workpiece W moves upwardly due to the deformation. More specifically, as illustrated in FIG. 9, the force applying apparatus 333 may move at least a part of the heating surface 3311 facing at least a part of the lower surface WSr of the workpiece W, which moves upwardly, in a case where at least a part of the lower surface WSr of the workpiece W moves upwardly due to the deformation. Therefore, even in a situation where the workpiece W is deformed, there is a high possibility that the size of the area at which the heating surface 3311 contacts the lower surface WSr of the workpiece W is larger in a case where the force applying apparatus 333 applies the force, compared to a case where the force applying apparatus 333 does not apply the force. Even in a situation where the workpiece W is deformed, there is a high possibility that the difference between the shape of the heating surface 3311 and the shape of the lower surface WSr of the workpiece W is smaller in a case where the force applying apparatus 333 applies the force, compared to a case where the force applying apparatus 333 does not apply the force. Therefore, the heating apparatus 331 can heat the workpiece W efficiently even in a situation where the workpiece W is deformed.

Incidentally, considering that the force applied by the force applying apparatus 333 keeps the lower surface WSr of the workpiece W in contact with the heating surface 3311, the heating apparatus 331 (especially, the heating surface 3311) may be moved downwardly in a case where the workpiece W moves downwardly due to the deformation. More specifically, in a case where at least a part of the lower surface WSr of the workpiece W moves downwardly due to the deformation, at least a part of the heating surface 3311 facing at least a part of the lower surface WSr that moves downwardly may be moved downwardly. Namely, the force applied by the force applying apparatus 333 to the heating apparatus 331 may be a force having a strength that realizes a state where the heating apparatus 331 (especially, the heating surface 3311) is moved downwardly in a case where the workpiece W moves downwardly. The force applied by the force applying apparatus 333 to the heating apparatus 331 may be a force having a strength that realizes a state where at least a part of the heating surface 3311 facing at least a part of the lower surface WSr of the workpiece W, which moves downwardly, is moved downwardly in a case where the workpiece W moves downwardly.

The same can be applied to a case where the thermally conductive member 3313 is disposed between the heating apparatus 331 and the workpiece W. Namely, even in a situation where the workpiece W is deformed, there is a high possibility that the size of the area at which the thermally conductive member 3313 contacts the lower surface WSr of the workpiece W is larger in a case where the force applying apparatus 333 applies the force, compared to a case where the force applying apparatus 333 does not apply the force. Even in a situation where the workpiece W is deformed, the difference between the shape of the thermally conductive member 3313 and the shape of the lower surface WSr of the workpiece W is smaller in a case where the force applying apparatus 333 applies the force, compared to a case where the force applying apparatus 333 does not apply the force. Therefore, the heating apparatus 331 can heat the workpiece W efficiently even in a situation where the workpiece W is deformed.

In addition, in a case where the support part 3341 satisfies the above-described stiffness condition, the support part 3341 can keep supporting the deformed workpiece W properly. Specifically, as described above, the stiffness condition is the condition that the stiffness of the support part 3341 in the first stiffness direction (for example, the thickness direction of the plate spring, and the direction along the XY plane in FIG. 9) is lower than the stiffness of the support part 3341 in the second stiffness direction (for example, the length direction of the plate spring, and the Z-axis direction in FIG. 9). In this case, the support part 3341 can be deformed more easily so that at least a part of the support part 3341 is displaced along the direction along the XY plane as the workpiece W is deformed, compared to a case where the stiffness condition is not satisfied. As a result, even in a case where the workpiece W is deformed, the support part 3341 is deformed so that the connecting part 3342, which connects the support part 3341 to the workpiece W, can follow the deformed workpiece W. Therefore, the support part 3341 can keep supporting the deformed workpiece W. On the other hand, since the stiffness of the support part 3341 in the second stiffness direction (the Z-axis direction in FIG. 9) is relatively high, there is a low possibility that the support part 3341 is buckled by the weight of the workpiece W even in a case where the workpiece W is deformed. Therefore, the support part 3341 can keep supporting the deformed workpiece W properly.

In addition, in a case where the plurality of support parts 3341 are disposed to satisfy the above-described direction condition (see FIG. 6), a stiffness of a single support member is relatively high in a case where the support apparatus 334 including the plurality of support parts 3341 is regarded as the single support member. Especially, the stiffness of the single support member in the direction that intersects the direction along which the plurality of support parts 3341 extend (for example, the length direction of the plate spring, and the Z-axis direction in FIG. 9) is relatively high. In the example illustrated in FIG. 9, the stiffness of the single support member in the direction along the XY plane is relatively high. Specifically, as described above, each support part 3341 has the characteristic that the stiffness thereof in the thickness direction of the plate spring (in the example illustrated in FIG. 9, the direction along the XY plane) is relatively low. However, in a case where the above-described direction condition is satisfied, a direction in which the stiffness of one support part 3341 is relatively low intersects a direction in which the stiffness of another support part 3341, which is different from the one support part 3341, is relatively low. For example, in the example illustrated in FIG. 6, a direction in which the stiffness of each of the support part 3341#1 and 3341#3 is relatively low (the Y-axis direction) intersects a direction in which the stiffness of each of the support part 3341#2 and 3341#4 is relatively low (the X-axis direction). Therefore, in a case where the support apparatus 334 including the support part 3341#1 to 3341#4 is regarded as a single member, the stiffness of the single member in the X-axis direction is ensured to be relatively high by the support parts 3341#1 and 3342#3, and the stiffness of the single member in the Y-axis direction is ensured to be relatively high by the support parts 3341#2 and 3342#4. Namely, in a case where the support apparatus 334 including the plurality of support parts 3341 is regarded as the single member, the stiffness of the single member is relatively high. As a result, the support parts 3341 can properly support the workpiece W.

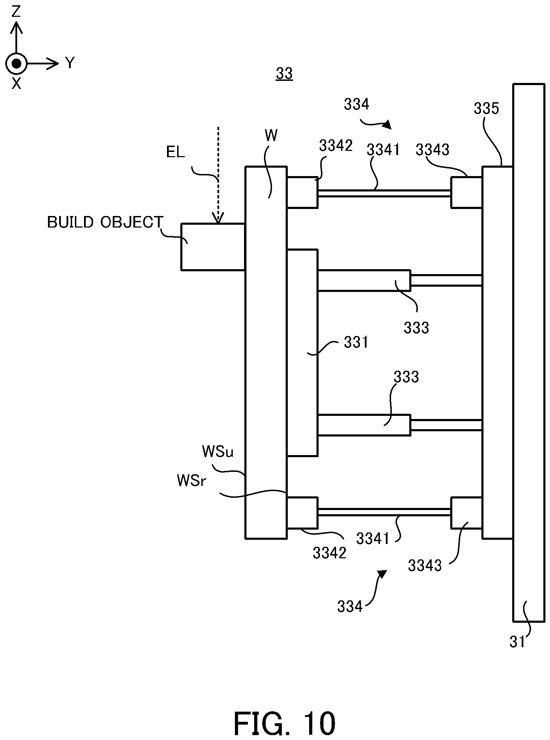

As one example, FIG. 10 illustrates a state of the heating support unit 33 in a case where the stage 31 is rotated 90 degrees around the X-axis. Here, in a case where the direction condition is not satisfied, there is a possibility that all of the directions in which the stiffness of the plurality of support parts 3341 are low coincide with the gravity direction. As a result, there is a possibility that all of the plurality of support parts 3341 are deformed by the gravity, and the support apparatus 334 cannot properly support the workpiece W. In a case where the direction condition is satisfied, however, there is a high possibility that the direction in which the stiffness of at least one of the plurality of support parts 3341 is low does not coincide with the gravity direction. Namely, there is a high possibility that the direction in which the stiffness of at least one of the plurality of support parts 3341 is high intersects or coincides with the gravity direction. As a result, there is a low possibility that the support apparatus 334 is deformed by the gravity. Therefore, the support apparatus 334 can properly support the workpiece W while reducing the effect of the gravity.

The control apparatus 7 may control the heating aspect of the workpiece W by the heating support unit 33 based on a distance from the upper surface of the workpiece W to the uppermost structural layer that has been built on the workpiece W in at least a part of a period during which the build system SYS builds the 3D structural object on the workpiece W. The distance from the upper surface of the workpiece W to the uppermost structural layer built on the workpiece W may indicate a height (namely, a distance in the Z-axis direction) to the uppermost structural layer built on the workpiece W.

### (3) Modified Example

Next, a modified example of the build system SYS will be described. Incidentally, a detailed description about the component that have already been described is omitted by assigning the same reference number thereto.

### (3-1) First Modified Example

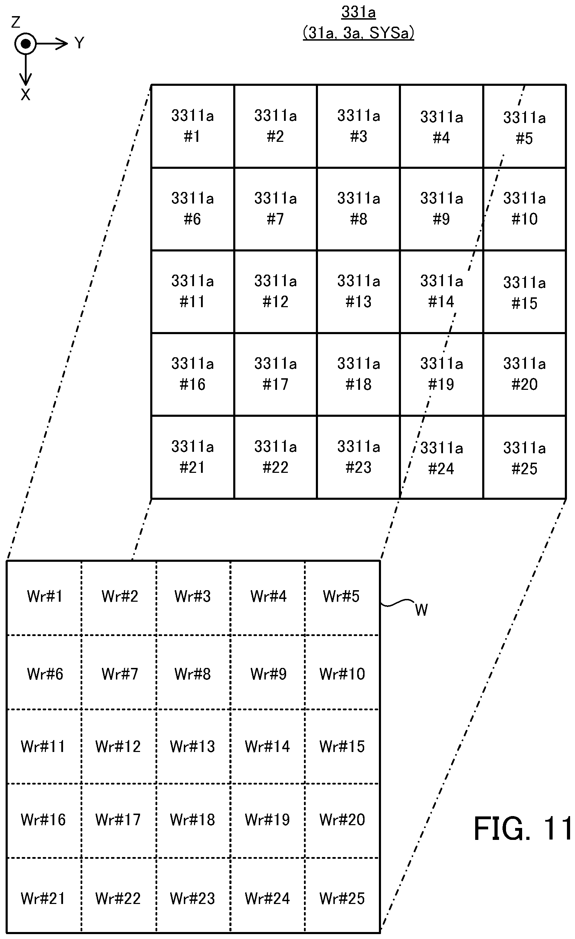

Firstly, a first modified example of the build system SYS will be described. In the below-described description, the first modified example of the build system SYS is referred to as the "build system SYSa". The build system SYSa in the first modified example is different from the above-described build system SYS in that it includes a stage apparatus 3a instead of the stage apparatus 3. Other feature of the build system SYSa may be the same as other feature of the build system SYS. The stage apparatus 3a is different from the stage apparatus 3 in that it includes a heating support unit 33a instead of the heating support unit 33. Other feature of the stage apparatus 3a may be the same as other feature of the stage apparatus 3. The heating support unit 33a is different from the heating support unit 33 in that it includes a heating apparatus 331a instead of the heating apparatus 331. Other feature of the heating support unit 33a may be the same as other feature of the heating support unit 33. Therefore, in the below-described description, the heating apparatus 331a in the first modified example will be described with reference to FIG. 11. FIG. 11 is a plan view that illustrates a heating surface 3311a of the heating apparatus 331a in the first modified example.

As illustrated in FIG. 11, the heating apparatus 331a is different from the heating apparatus 331 that includes the single heating surface 3311 in that it includes a plurality of heating surfaces 3311a. In the example illustrated in FIG. 11, the heating apparatus 331a includes 25 heating surfaces 3311a (specifically, heating surfaces 3311a #1 to 3311a #25). However, the number of heating surfaces 3311a is not limited to the number illustrated in FIG. 11. Other feature of the heating apparatus 331a may be the same as other feature of the heating apparatus 331.

At least two of the plurality of heating surfaces 3311a may be surfaces that are physically separated from each other. Namely, at least two of the plurality of heating surfaces 3311a may be surfaces that are physically distinguishable from each other. At least two of the plurality of heating surfaces 3311a may be surfaces that are physically integrated with each other. Namely, one surface part of a certain single heating surface may be used as one heating surface 3311a and another surface part, which is different from the one surface part, of the same single heating surface may be used as another heating surface 3311a.

Each heating surface 3311a may heat the workpiece W. Specifically, each heating surface 3311a may heat a lower surface part Wr of the lower surface WSr of the workpiece W. The lower surface part Wr, which corresponds to each heating surface 3311a, of the lower surface WSr of the workpiece W typically includes at least a part of a surface part, which faces each heating surface 3311a, of the lower surface WSr of the workpiece W. In the example illustrated in FIG. 11, the heating surface 3311a#k (wherein, k is a variable number representing an integer that is equal to or larger than 1 and that is equal to or smaller than 25) may heat the lower surface part Wr#k of the lower surface WSr corresponding to the heating surface 3311a#k.

The lower surface part Wr#k that may be heated by the heating surface 3311a#k may overlap at least partially with the lower surface part Wr#m (wherein, m is a variable number representing an integer that is equal to or larger than 1, that is equal to or smaller than 25, and that is different from the variable number k) that may be heated by the heating surface 3311a#m that is different from the heating surface 3311a#k. In this case, the heating surface 3311a#k may be considered to heat the lower surface part Wr#m at least partially in addition to the lower surface part Wr#k. The heating surface 3311a#k may be considered to include at least a part of the heating surface 3311a#m. As one example, at least a part of the lower surface part Wr#13 that may be heated by the heating surface 3311a#13 may overlap at least partially with at least a part of the lower surface part Wr#8 that may be heated by the heating surface 3311a#8 adjacent to the heating surface 3311a#13. In this case, the heating surface 3311a#13 may be considered to at least a part of the lower surface part Wr#8 in addition to lower surface part Wr#13. The heating surface 3311a#13 may be considered to include at least a part of the heating surface 3311a#8.

Alternatively, the lower part Wr#k that may be heated by the heating surface 3311a#k may not overlap with the lower part Wr#m that may be heated by the heating surface 3311a#m. The heating surface 3311a#k may not heat the lower surface part Wr#m that is different from the lower surface part Wr#k.

In the first modified example, the control apparatus 7 may control the temperatures of the plurality of heating surfaces 3311a individually. For example, the control apparatus 7 may control the temperature of the heating surface 3311a#k (one heating surface 3311a of the plurality of heating surfaces 3311a) separately and independently from the temperature of the heating surface 3311a#m that is different from the heating surface 3311a#k (namely, another heating surface 3311a, which is different from the one heating surface 3311a, of the plurality of heating surfaces 3311a). In this case, the control apparatus 7 may control the temperatures of the plurality of heating surfaces 3311a individually so that the difference between the temperature of the upper surface WSu of the workpiece W and the temperature of the lower surface WSr of the workpiece W is smaller (namely, the temperature gradient becomes gradual), compared to a case where the heating apparatus 331 does not heat the lower surface WSr of the workpiece W.

The temperature of each heating surface 3311a depends on the amount of the heat generated by each heating surface 3311a. Therefore, an operation of controlling the temperature of each heating surface 3311a may be considered to be equivalent to an operation of controlling the amount of the heat generated by each heating surface 3311a. Moreover, the temperature of the heating surface 3311a that heats the workpiece W (namely, that generates the amount of the heat) is usually different from the temperature of the heating surface 3311a that does not heat the workpiece W (namely, that does not generate the amount of the heat). Therefore, the operation of controlling the temperature of each heating surface 3311a may include an operation of switching a state of each heating surface 3311a between a heat ON state and a heat OFF state. The heat ON state may mean a state in which each heating surface 3311a heats the workpiece W. The heat OFF state may mean a state in which each heating surface 3311a does not heat the workpiece W.

The amount of the heat transferred from each heating surface 3311a to the workpiece W per unit time changes as the temperature of each heating surface 3311a changes. Therefore, the operation of controlling the temperature of each heating surface 3311a may be considered to be equivalent to an operation of controlling the amount of the heat transferred from each heating surface 3311a to the workpiece W per unit time. In this case, the control apparatus 7 may control the amounts of the heat transferred from the plurality of heating surfaces 3311a to the workpiece W per unit of time individually. For example, the control apparatus 7 may control the amount of the heat transferred from the heating surfaces 3311a#k to the workpiece W (especially, the lower surface part Wr#k) per unit time separately and independently from the amount of the heat transferred from the heating surface 3311a#m to the workpiece W (especially, the lower surface part Wr#m) per unit time. In this case, the control apparatus 7 may control the amounts of the heat transferred from the plurality of heating surfaces 3311a to the workpiece W per unit of time individually so that the difference between the temperature of the upper surface WSu of the workpiece W and the temperature of the lower surface WSr of the workpiece W is smaller (namely, the temperature gradient becomes gradual), compared to a case where the heating apparatus 331 does not heat the lower surface WSr of the workpiece W.

A distribution of a heated amount of the workpiece W (especially, the heated amount of the lower surface WSr) by the heating apparatus 311 changes as the amount of the heat transferred from each heating surface 3311a to each lower surface part Wr of the workpiece W per unit time changes. Therefore, the control apparatus 7 may be considered to control the distribution of the heated amount of the workpiece W by the heating apparatus 311. The operation of controlling the temperature of each heating surface 3311a may be considered to be equivalent to an operation of controlling the distribution of the heated amount of the workpiece W by the heating apparatus 311. In this case, the control apparatus 7 may control the heating apparatus 331 so that the distribution of the heated amount of the workpiece W by the heating apparatus 311 is a desired first distribution. The desired first distribution may be a distribution that can realize a state in which the difference between the temperature of the upper surface WSu of the workpiece W and the temperature of the lower surface WSr of the workpiece W is smaller, compared to a case where the heating apparatus 331a does not heat the lower surface WSr of the workpiece W.

A temperature distribution of the workpiece W (especially a temperature distribution of the lower surface WSr) changes as the amount of the heat transferred from each heating surface 3311a to each lower surface part Wr of the workpiece W per unit time changes. Therefore, the control apparatus 7 may be considered to control the temperature distribution of the workpiece W. The operation of controlling the temperature of each heating surface 3311a may be considered to be equivalent to an operation of controlling the temperature distribution of the workpiece W. In this case, the control apparatus 7 may control the heating apparatus 331 so that the temperature distribution of the workpiece W is a desired second distribution. The desired second distribution may be a distribution that can realize a state in which the difference between the temperature of the upper surface WSu of the workpiece W and the temperature of the lower surface WSr of the workpiece W is smaller, compared to a case where the heating apparatus 331a does not heat the lower surface WSr of the workpiece W.

In a case where the temperatures of the plurality of heating surfaces 3311a are controlled individually, the control apparatus 7 may control the heating apparatus 331 so that the temperature of the heating surface 3311a#k (namely, one heating surface 3311a of the plurality of heating surfaces 3311a) is different from the temperature of the heating surface 3311a#m (namely, another heating surface 3311a of the plurality of heating surfaces 3311a that is different from the one heating surface 3311a). Specifically, the control apparatus 7 may control the heating apparatus 331a so that the temperature of the heating surface 3311a#k and the temperature of the heating surface 3311a#m are different from each other at the same time. In other words, the control apparatus 7 may control the heating apparatus 331a so that the temperature of heating surface 3311a#k at a certain time and the temperature of heating surface 3311a#m at the same time are different temperatures.

In a case where the amount of the heat transferred from the plurality of heating surfaces 3311a to the workpiece W per unit of time is controlled individually, the control apparatus 7 may control the heating apparatus 331a so that the amount of the heat transferred from the heating surface 3311a#k to the workpiece W (especially, the lower surface part Wr#k) per unit of time is different from the amount of the heat transferred from the heating surface 3311a#m to the workpiece W (especially, the lower surface part Wr#m) per unit time. Specifically, the control apparatus 7 may control the heating apparatus 331a so that the amount of the heat transferred from the heating surface 3311a#k to the workpiece W (especially, the lower surface part Wr#k) per unit time at a certain time is different from the amount of the heat transferred from the heating surface 3311a#m to the workpiece W (especially, the lower surface part Wr#m) per unit time at the same time.

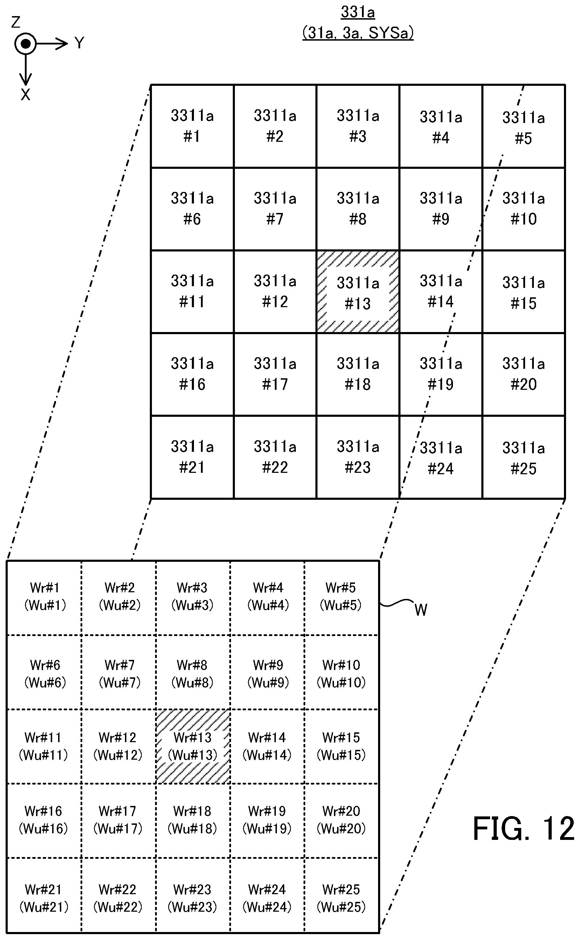

The control apparatus 7 may control the temperatures of the plurality of heating surfaces 3311a individually based on the irradiation position on the workpiece W of the build light EL emitted by the build apparatus 2. Specifically, in a case where the temperatures of the heating surfaces 3311a are controlled based on the irradiation position of the build light EL, the upper surface WSu of the workpiece W may be divided into a plurality of upper surface parts Wu, which correspond to a plurality of lower surface parts Wr included in the lower surface WSr of the workpiece W, as illustrated in FIG. 12. One upper surface part Wu corresponding to one lower surface part Wr may typically include a surface part, which overlaps with one lower surface part Wr along the irradiation direction of the build light EL (for example, the Z-axis direction), of the upper surface WSu of the workpiece W. In the example illustrated in FIG. 12, the lower surface part Wr#k and the upper surface part Wu#k correspond to each other.

The control apparatus 7 may determine the irradiation position of the build light EL based on control information for controlling the build apparatus 2 and the stage apparatus 3 to perform the additive manufacturing on the workpiece W. For example, path information (so-called tool path) that indicates a movement trajectory of a build position (for example, a condensed position of the build light EL) by the build apparatus 2 is one example of the control information. In this case, the control apparatus 7 may determine the irradiation position of the build light EL based on the path information. Alternatively, the control apparatus 7 may determine the irradiation position of the build light EL based on a signal for indicating a position that is irradiated with the build light EL.

The irradiation position of the build light EL may include a position along the surface of the workpiece W. The irradiation position of the build light EL may include a position in a plane along the surface of the workpiece W. The irradiation position of the build light EL may include a position in the XY plane.

The irradiation position of the build light EL may include a position along a direction intersecting the surface of the workpiece W. The irradiation position of the build light EL may include a position along the Z-axis direction. For example, as described above, the build apparatus 2 builds the 3D structural object by stacking the plurality of structural layers in the Z-axis direction. In this case, the control apparatus 7 may determine the irradiation position of the build light EL in the Z-axis direction based on a position of the structural layer being built by the build apparatus 2.

Then, the control apparatus 7 may control the heating apparatus 311a so that the amount of the heat transferred per unit time from the heating surface 3311a#k to the lower surface part Wr#k, which corresponds to the upper surface part Wu#k, is different from the amount of the heat transferred per unit time from the heating surface 3311a#k to the lower surface part Wr#m, which is different from the lower surface part Wr#k, in a case where the upper surface part Wu#k is irradiated with the build light EL. A reason for this is as follows. Firstly, there is a high possibility that the temperature of the upper surface part Wu#k, which is irradiated with the build light EL, is higher than the temperature of the upper surface part Wu#m, which is not irradiated with the build light EL. Therefore, there is a high possibility that a difference between the temperature of the upper surface part Wu#k, which is irradiated with the build light EL, and the temperature of the lower surface part Wr#k is larger than a difference between the temperature of the upper surface part Wu#m, which is not irradiated with the build light EL, and the temperature of the lower surface part Wr#k. Therefore, the heating apparatus 331a may preferentially heat the lower surface part Wr#k corresponding to the upper surface part Wu#k that is irradiated with the build light EL to thereby preferentially reduce the difference between the temperature of the upper surface part Wu#k that is irradiated with the build light EL and the temperature of the lower surface part Wr#k. For example, the heating apparatus 331a may reduce the difference between the temperature of the upper surface part Wu#k, which is irradiated with the build light EL, and the temperature of the lower surface part Wr#k to be closer to the difference between the temperature of the upper surface part Wu#m, which is not irradiated with the build light EL, and the temperature of the lower surface part Wr#m. As a result, the deformation of the workpiece W is appropriately prevented.

On the other hand, the upper surface part Wu#k, which is not irradiated with the build light EL, is not easily heated by the build light EL. Therefore, a priority of heating the lower surface part Wr#k is low because the difference between the temperature of the upper surface part Wu#k, which is not irradiated with the build light EL, and the temperature of the lower surface part Wr#k is relatively small. In the first modified example, the heating apparatus 331a may not necessarily heat the lower surface part Wr#k. Namely, in the first modified example, the heating apparatus 331a may not necessarily heat whole of the lower surface WSr of the workpiece W. The heating apparatus 331a may not necessarily heat the lower surface WSr of the workpiece W by using all of the plurality of heating surfaces 3311a. As a result, an amount of an energy required by the heating apparatus 331a to heat the workpiece W is reduced. Therefore, a cost for the heating by the heating apparatus 331a is reduced.

Incidentally, in a case where not the upper surface part Wu#k but the upper surface part Wu#m is irradiated with the build light EL, the control apparatus 7 may control the heating apparatus 311a so that the amount of the heat transferred per unit time from the heating surface 3311a#m to the lower surface part Wr#m, which corresponds to the upper surface part Wu#m is larger than the amount of the heat transferred per unit time from the heating surface 3311a#m to the lower surface part Wr#k, which is different from the lower surface part Wr#m. Even in this case, the heating apparatus 331a may preferentially heat the lower surface part Wr#m corresponding to the upper surface part Wu#m that is irradiated with the build light EL to thereby preferentially reduce the difference between the temperature of the upper surface part Wu#m that is irradiated with the build light EL and the temperature of the lower surface part Wr#m. As a result, the deformation of the workpiece W is appropriately prevented.

FIG. 12 illustrates an example in which the upper surface part Wu#13 is irradiated with the build light EL. In this case, the control apparatus 7 may control the heating apparatus 331a so that the amount of the heat transferred per unit time from the heating surface 3311a#13 to the lower surface part Wr#13 is larger than the amount of the heat transferred per unit time from the heating surfaces 3311a#1 to 3311a#12 and 3311a#14 to 3311a#25 to the lower surface parts Wr#1 to Wr#12 and Wr#14 to Wr#25.

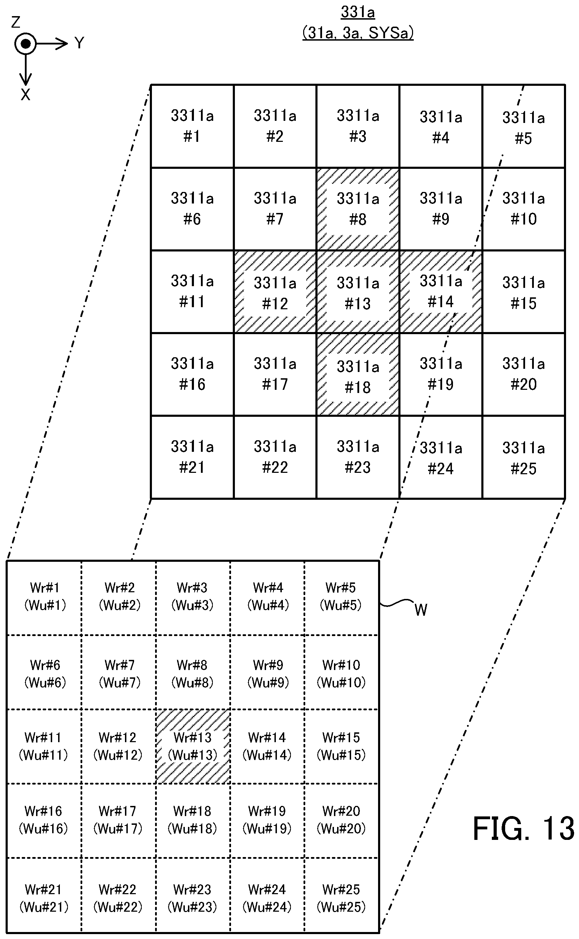

However, in a case where the upper surface part Wu#k is irradiated with the build light EL, there is a possibility that not only the upper surface part Wu#k but also the upper surface part Wu#n (wherein, n is a variable number representing an integer that is equal to or larger than 1, that is equal to or smaller than 25, and that is different from the variable number k) that is adjacent to the upper surface part Wu#k are heated by the build light EL. This is because there is a possibility that the energy transferred from the build light EL to the upper surface part Wu#k is transferred through the upper surface part Wu#k to the upper surface part Wu#n that is adjacent to the upper surface part Wu#k. Therefore, in a case where the upper surface part Wu#k is irradiated with the build light EL, the control apparatus 7 may control the heating apparatus 311a so that the amount of the heat transferred per unit time from the heating surface 3311a#k to the lower surface part Wr#k corresponding to the upper surface part Wu#k and the amount of the heat transferred per unit time from the heating surface 3311a#n to the lower surface part Wr#n corresponding to the upper surface part Wu#n that is adjacent to the upper surface part Wu#k is larger than the amount of the heat transferred per unit time from the heating surface 3311a#o to the lower surface part Wr#o (wherein, o is a variable number representing an integer that is equal to or larger than 1, that is equal to or smaller than 25, and that is different from the variable numbers k and n) different from the lower surface parts Wr#k and Wr#n. As one example, FIG. 13 illustrates an example in which the upper surface part Wu#13 is irradiated with the build light EL. In this case, the upper surface parts Wu#8, Wu#12, Wu#14 and Wu#18 may be considered to be adjacent to the upper surface part Wu#13. In this case, the control apparatus 7 may control the heating apparatus 331a so that the amount of the heat transferred per unit time from the heating surfaces 3311a#8, 3311a#12 to 3311a#14 and 3311a#18 to the lower surface parts Wr#8, Wr#12 to Wr#14 and Wr#18, respectively, is larger than the amount of the heat transferred per unit time from the heating surfaces 3311a#1 to 3311a#7, 3311a#9 to 3311a#11, 3311a#15 to 3311a#17 and 3311a#19 to 3311 a#25 to the lower surface parts Wr#1 to Wr#7, Wr#9 to Wr#11, Wr#15 to Wr#17 and Wr#19 to Wr#25, respectively.

Furthermore, in the first modified example, the heating support unit 33a may include a plurality of temperature sensors 332. The plurality of temperature sensors 332 may correspond to the plurality of heating surfaces 3311a, respectively. For example, the plurality of temperature sensors 332 may be configured to respectively detect the temperatures of the plurality of lower surface parts Wr, which are heated by the plurality of heating surfaces 3311a, respectively. In this case, the control apparatus 7 may control the heating surface 3311a#k that heats the lower surface part Wr#k based on the detected result by the temperature sensor 332 that detects the temperature of the lower surface part Wr#k. Namely, the control apparatus 7 may control the heating apparatus 331a to heat the lower surface part Wr#k by using the heating surface 3311a#k based on the detected result by the temperature sensor 332 that detects the temperature of the lower surface part Wr#k. Similarly, the control apparatus 7 may control the heating surface 3311a#m that heats the lower surface part Wr#m based on the detected result by the temperature sensor 332 that detects the temperature of the lower surface part Wr#m. Namely, the control apparatus 7 may control the heating apparatus 331a to heat the lower surface part Wr#m by using the heating surface 3311a#m based on the detected result by the temperature sensor 332 that detects the temperature of the lower surface part Wr#m.

In the examples illustrated in FIG. 11 to FIG. 13, sizes of the plurality of heating surfaces 3311a are the same as each other. However, the sizes of at least two of the plurality of heating surfaces 3311a may be different from each other. Moreover, in the examples illustrated in FIG. 11 to FIG. 13, shapes of the plurality of heating surfaces 3311a are the same as each other. However, the shapes of at least two of the plurality of heating surfaces 3311a may be different from each other. Any characteristics of the plurality of heating surfaces 3311a may be the same as each other. Any characteristics of at least two of the plurality of heating surfaces 3311a may be different from each other. At least one of a maximum heating temperature and a temperature change speed is one example of any characteristic.

The control apparatus 7 may control the heating aspect of the workpiece W by the heating support unit 33 based on a distance from the upper surface of the workpiece W to the uppermost structural layer that has been built on the workpiece W in at least a part of the period during which the build system SYS builds the 3D structural object on the workpiece W. Especially, the control apparatus 7 may control the heating aspect of each lower surface part Wr corresponding to each upper surface part Wu based on a distance from each upper surface part Wu of the workpiece W to the uppermost structural layer that has been built on each upper surface part Wu (namely, the built object that has been built on each upper surface part Wu). The distance from each upper surface part Wu to the uppermost structural layer built on each upper surface part Wu may indicate a height (namely, a distance in the Z-axis direction) to the uppermost structural layer built on each upper surface part Wu.

### (3-2) Second Modified Example

Next, a second modified example of the build system SYS will be described. Incidentally, in the below-described description, the second modified example of the build system SYS is referred to as the "build system SYSb". The build system SYSb in the second modified example is different from the above-described build system SYS or SYSa in that the heating support unit 33 is replaceable. Other feature of the build system SYSa may be the same as other feature of the build system SYS.

Specifically, in the build system SYSb, as the heating support unit 33 that is placed on the stage 31 and supports the workpiece W, one heating support unit 33 selected from a plurality of different heating support units 33 is usable. For example, a first heating support unit 33#1 of the plurality of different heating support units 33 may be placed on the stage 31 and the first heating support unit 33#1 may support the workpiece W. For example, the first heating support unit 33#1 may be removed from the stage 31 and a second heating support unit 33#2, which is different from the first heating support unit 33#1, of the plurality of different heating support units 33 may be newly placed on the stage 31. In this case, the second heating support unit 33#2 may support the workpiece W instead of the first heating support unit 33#1. For example, the second heating support unit 33#2 may be removed from the stage 31 and a third heating support unit 33#3, which is different from the first support unit 33#1 and the second heating support unit 33#2, of the plurality of different heating support units 33 may be newly placed on the stage 31. In this case, the third heating support unit 33#3 may support the workpiece W instead of the first heating support unit 33#1 and the second heating support unit 33#2.

As one example, one heating support unit 33 selected from two different heating support units 33 may be used as the heating support unit 33 that is placed on the stage 31 and supports the workpiece W. One heating support unit 33 selected from three different heating support units 33 may be used as the heating support unit 33 that is placed on the stage 31 and supports the workpiece W. One heating support unit 33 selected from four or more different heating support units 33 may be used as the heating support unit 33 that is placed on the stage 31 and supports the workpiece W.

In this case, one heating support unit 33 that satisfies a condition required for the heating support unit 33 may be selected from the plurality of different heating support units 33 as the heating support unit 33 that is placed on the stage 31 and supports the workpiece W.

As one example, the heating support unit 33 heats the workpiece W as described above. Therefore, one heating support unit 33 that satisfies a heating condition, which is a condition related to the heating of the workpiece W, may be selected from the plurality of different heating support units 33 as the heating support unit 33 that is placed on the stage 31 and supports the workpiece W. The heating condition may include at least one of a condition related to the amount of the heat that should be transferred by the heating support unit 33 to the workpiece W per unit time, a condition related to a thermal conductivity of the workpiece W that should be heated by the heating support unit 33, a condition related to the shape of the workpiece W that should be heated by the heating support unit 33, and a condition related to the size of the workpiece W that should be heated by the heating support unit 33.

As another example, the heating support unit 33 supports the workpiece W as described above. Therefore, one heating support unit 33 that satisfies a support condition, which is a condition related to the support of the workpiece W, may be selected from the plurality of different heating support units 33 as the heating support unit 33 that is placed on the stage 31 and supports the workpiece W. The support condition may include at least one of a condition related to a weight of the workpiece W that should be supported by the heating support unit 33, a condition related to the shape of the workpiece W that should be supported by the heating support unit 33, and a condition related to the size of the workpiece W that should be supported by the heating support unit 33. Furthermore, in a case where the built object is built on the workpiece W, the heating support unit 33 supports the built object built on the workpiece W by supporting the workpiece W. Therefore, the support condition may include at least one of a condition related to a weight of the build object that should be supported by the heating support unit 33, a condition related to a shape of the build object that should be supported by the heating support unit 33, and a condition related to a size of the build object that should be supported by the heating support unit 33.

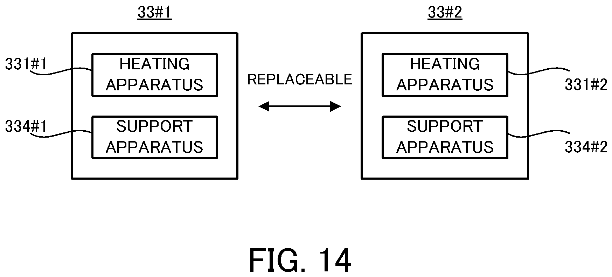

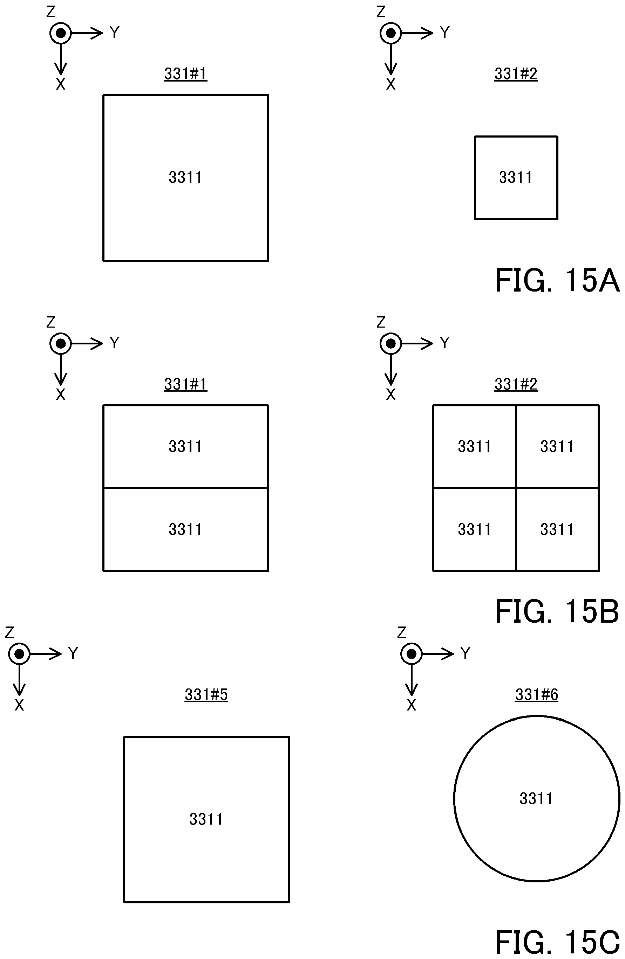

As illustrated in FIG. 14, the first heating support unit 33#1 and the second heating support unit 33#2 may be different from each other in that the heating apparatus 331 of the first heating support unit 33#1 (it is referred to as the "heating apparatus 331#1" in the below-described description) is different from the heating apparatus 331 of the second heating support unit 33#2 (it is referred to as the "heating apparatus 331#2" in the below-described description). The heating apparatuses 331#1 and 331#2 may be different from each other in that a characteristic of the heating apparatus 331#1 is different from a characteristic of the heating apparatus 331#2. For example, as illustrated in FIG. 15A, the heating apparatuses 331#1 and 331#2 may be different from each other in that the size of the heating surface 3311 of the heating apparatus 331#1 is different from the size of the heating surface 3311 of the heating apparatus 331#2. For example, as illustrated in FIG. 15B, the heating apparatuses 331#1 and 331#2 may be different from each other in that the number of the heating surface 3311 of the heating apparatus 331#1 is different from the number of the heating surface 3311 of the heating apparatus 331#2. For example, as illustrated in FIG. 15C, the heating apparatuses 331#1 and 331#2 may be different from each other in that the shape of the heating surface 3311 of the heating apparatus 331#1 is different from the shape of the heating surface 3311 of the heating apparatus 331#2. In this case, one heating support unit 33 that satisfies the above-described heating condition may be selected from the plurality of different heating support units 33 as the heating support unit 33 that is placed on the stage 31 and supports the workpiece W.

As illustrated in FIG. 14, the first heating support unit 33#1 and the second heating support unit 33#2 may be different from each other in that the support apparatus 334 of the first heating support unit 33#1 (it is referred to as the "support apparatus 334#1" in the below-described description) is different from the support apparatus 334 of the second heating support unit 33#2 (it is referred to as the "support apparatus 334#2" in the below-described description). The support apparatuses 334#1 and 334#2 may be different from each other in that a characteristic of the support apparatus 334#1 is different from a characteristic of the support apparatus 334#2. For example, the support apparatuses 334#1 and 334#2 may be different from each other in that a load capacity of the support apparatus 334#1 is different from the load capacity of the support apparatus 334#2. For example, the support apparatuses 334#1 and 334#2 may be different from each other in that the number of the support member 3340 of the support apparatus 334#1 is different from the number of the support member 3340 of the support apparatus 334#2. For example, the support apparatuses 334#1 and 334#2 may be different from each other in that the disposed position of the support member 3340 of the support apparatus 334#1 is different from the disposed position of the support member 3340 of the support apparatus 334#2. For example, the support apparatuses 334#1 and 334#2 may be different from each other in that the size of the support member 3340 (for example, at least one of the length, the width, and the thickness of the plate spring that is used as the support member 3340) of the support apparatus 334#1 is different from the size of the support member 3340 of the support apparatus 334#2. In this case, one heating support unit 33 that satisfies the above-described support condition may be selected from the plurality of different heating support units 33 as the heating support unit 33 that is placed on the stage 31 and supports the workpiece W.

The heating support unit 33 may be replaced after the build system SYS is shipped. In this case, a user of the build system SYS may replace the heating support unit 33. An operator who operates the build system SYS may replace the heating support unit 33. Alternatively, the heating support unit 33 may be replaced before the build system SYS is shipped.

The heating support unit 33 may be replaceable by using a general purpose tool (for example, at least one of a wrench and a nut) or a general purpose apparatus (for example, a changer). The heating support unit 33 may be replaceable by using a dedicated tool or dedicated apparatus for replacing the heating support unit 33.

In a case where the heating support unit 33 is replaceable, a system unit including the build system SYS and at least one heating support unit 33 may be sold and delivered. After the build system SYS is sold and delivered, at least one heating support unit 33 may be sold and delivered separately from the build system SYS.

As described above, in the second modified example, one heating support unit 33 of the plurality of different heating support units 33 that satisfies the condition required for the heating support unit 33 is used as the heating support unit 33 that is placed on the stage 31 and supports the workpiece W. Therefore, the build system SYSb can properly support and heat the workpiece W by using one heating support unit 33 that satisfies the condition required for the heating support unit 33.

Moreover, in the second modified example, the heating support unit 33 of the build system SYSb is replaceable according to the conditions required for the heating support unit 33. Therefore, the heating support unit 33 of the build system SYSb is replaceable according to the characteristic (for example, the size and the like as described above) of the workpiece W processed by the build system SYSb. For example, in a case where the characteristic of the workpiece W processed by the build system SYSb changes, the heating support unit 33 of the build system SYSb is replaceable. Therefore, the build system SYSb can properly support and heat the workpiece W even in a case where the characteristic of the workpiece W processed by the build system SYSb changes.

Incidentally, the first heating support unit 33#1 may be different from the second heating support unit 33#2 in that the temperature sensor 332 of the first heating support unit 33 is different from the temperature sensor 332 of the second heating support unit 33. The first heating support unit 33#1 may be different from the second heating support unit 33#2 in that the force applying apparatus 333 of the first heating support unit 33 is different from the force applying apparatus 333 of the second heating support unit 33. The first heating support unit 33#1 may be different from the second heating support unit 33#2 in that the cooling apparatus 335 of the first heating support unit 33 is different from the cooling apparatus 335 of the second heating support unit 33.

The first heating support unit 33#1 may be different from the second heating support unit 33#2 in that either one of the first heating support unit 33#1 and the second heating support unit 33#2 includes the heating apparatus 331 while the other one of the first heating support unit 33#1 and the second heating support unit 33#2 does not include the heating apparatus 331. The first heating support unit 33#1 may be different from the second heating support unit 33#2 in that either one of the first heating support unit 33#1 and the second heating support unit 33#2 includes the temperature sensor 332 while the other one of the first heating support unit 33#1 and the second heating support unit 33#2 does not include the temperature sensor 332. The first heating support unit 33#1 may be different from the second heating support unit 33#2 in that either one of the first heating support unit 33#1 and the second heating support unit 33#2 includes the force applying apparatus 333 while the other one of the first heating support unit 33#1 and the second heating support unit 33#2 does not include the force applying apparatus 333. The first heating support unit 33#1 may be different from the second heating support unit 33#2 in that either one of the first heating support unit 33#1 and the second heating support unit 33#2 includes the support apparatus 334 while the other one of the first heating support unit 33#1 and the second heating support unit 33#2 does not include the support apparatus 334. The first heating support unit 33#1 may be different from the second heating support unit 33#2 in that either one of the first heating support unit 33#1 and the second heating support unit 33#2 includes the cooling apparatus 335 while the other one of the first heating support unit 33#1 and the second heating support unit 33#2 does not include the cooling apparatus 335.

Incidentally, in the second modified example, the plurality of heating support units 33 have different configurations. However, at least two of the plurality of heating support units 33 may have the same configuration. In this case, the at least two heating support units 33 having the same configuration may support a plurality of different workpieces W, respectively. When at least one heating support unit 33 is placed on the stage 31, the at least one heating support unit 33 may be automatically transported to the stage apparatus 3 by using a robot or the like. In a case where at least two heating support units 33 having the same configuration support the plurality of different workpieces W, respectively, the workpieces W may be placed on the heating support units 33 in advance. As a result, a setup time can be reduced. Especially in a case where it is necessary to fasten the workpiece W to the heating support unit 33, an effect of reducing the setup time is significant.

### (3-3) Other Modified Example

In the above-described description, the temperature sensor 332 detects the temperature of the workpiece W. However, the temperature sensor 332 may be configured to detect a temperature of the heating apparatus 331 (especially, the heating surface 3311). Since the heating surface 3311 heats the workpiece W, the temperature of the workpiece W depends on the temperature of the heating surface 3311. Therefore, the temperature sensor 332 may be considered to indirectly detect the temperature of the workpiece W by detecting the temperature of the heating apparatus 331 (especially, the heating surface 3311).

In the above-described description, the heating support unit 33 include the temperature sensor 332. However, the heating support unit 33 may not include the temperature sensor 332. In this case, the heating apparatus 331 may heat the workpiece W without using the detected result by the temperature sensor 332.

In the above-described description, the force applying apparatus 333 applies the force to the heating apparatus 331 by using the elastic member such as the spring. However, the force applying apparatus 333 may apply the force to the heating apparatus 331 without using the elastic member such as the spring. The force applying apparatus 333 may apply the force to the heating apparatus 331 by using a member or an apparatus that is different from the elastic member such as the spring. For example, the force applying apparatus 333 may apply the force to the heating apparatus 331 by using an apparatus that is configured to generate the force (for example, an actuator).

In the above-described description, the heating support unit 33 include the force applying apparatus 333. However, the heating support unit 33 may not include the force applying apparatus 333. Even in this case, the heating apparatus 331 may heat the workpiece W.

In the above-described description, the heating support unit 33 may be fastened to the stage 31 in order to hold the heating support unit 33 by the stage 31.

In the description above, the heating apparatus 331 of the heating support unit 33 heats the workpiece W. However, the workpiece W itself may be a heating element, because increasing the temperature of the workpiece W achieves the purpose. Namely, the heating support unit 33 may not include the heating apparatus 331. The workpiece W, which is made of a conductive material, may be inductively heated by using an induction heating coil disposed around the workpiece W.

In the above-described description, the heating support unit 33 include the support apparatus 334. However, the heating support unit 33 may not include the support apparatus 334. In this case, the workpiece W may be supported by an apparatus that is different from the support apparatus 334. For example, the workpiece W may be supported by the heating apparatus 331. For example, the workpiece W may be supported by the force applying apparatus 333. For example, the workpiece W may be supported by the cooling apparatus 335. For example, the workpiece W may be supported by other support apparatus.

In the above-described description, the heating support unit 33 include the cooling apparatus 335. However, the heating support unit 33 may not include the cooling apparatus 335. Namely, at least one of the force applying apparatus 333 and the support apparatus 334 may not be cooled. Even in this case, the force applying apparatus 333 may apply the force to the heating apparatus 331 and the support apparatus 334 may support the workpiece W. Alternatively, another apparatus (for example, the stage 31 described above) that is different from the cooling apparatus 335 and that supports at least one of the force applying apparatus 333 and the support apparatus 334 may serve as a cooling apparatus for cooling at least one of the force applying apparatus 333 and the support apparatus 334. For example, the force applying apparatus 333 and the support apparatus 334 may include cooling fins, and the force applying apparatus 333 and the support apparatus 334 may be cooled by airflow in the vicinity of the force applying apparatus 333 and the support apparatus 334.

Alternatively, a thermal insulating member may be disposed between the stage 31 and the force applying apparatus 333 and the support apparatus 334. Even in this case, the stage 31 can support the workpiece W without being deformed due to the heat generated by the heating apparatus 331. Incidentally, the thermal insulating member disposed between the stage 31 and the force applying apparatus 333 and the support apparatus 334 may have a characteristic that a coefficient of linear thermal expansion changes gradually along a direction from the force applying apparatus 333 and the support apparatus 334 to the stage 31. In this case, even if the heat generated by the heating apparatus 331 is transferred to the thermal insulating member, an influence of the expansion of the thermal insulating member on the workpiece W is reduced because of the gradual expansion of the thermal insulating member.

In the above-described description, the build system SYS melts the build material M by irradiating the build material M with the build light EL. However, the build system SYS may melt the build material M by irradiating the build material M with an arbitrary energy beam. At least one of a charged particle beam and an electromagnetic wave is one example of the arbitrary energy beam. At least one of an electron beam, an ion beam, and the like is one example of the charged particle beam.

In the above-described description, the SYS builds the 3D structural object by performing the additive manufacturing based on the Laser Metal Deposition. However, the SYS may build the 3D structural object ST by performing the additive manufacturing based on other method for building the 3D structural object. At least one of a Powder Bed Fusion method such as a Selective Laser Sintering (SLS), a Binder Jetting, a Material Jetting, a stereolithography, and a Laser Metal Fusion (LMF) is one example of other method for building the 3D structural object. Incidentally, in a case where an apparatus that builds the 3D structural objects ST by using the Powder Bed Fusion is used, the heating support unit 33 may be placed on a build stage that is movable upwardly and downwardly, for example. Alternatively, the build system SYS may build the 3D structural object by performing a subtractive manufacturing in addition to or instead of performing the additive manufacturing. The build system SYS may build the 3D structural object by performing a machining-processing in addition to or instead of performing at least one of the additive manufacturing and subtractive manufacturing.

The heating support unit 33 may include an apparatus that is configured to cool the workpiece W in addition to or instead of the heating apparatus 331. The heating support unit 33 may include an apparatus that is configured to heat and cool the workpiece W in addition to or instead of the heating apparatus 331. In this case, the control apparatus 7 may control a cooling aspect of the workpiece W by the heating support unit 33. The cooling aspect may include at least one of a cooling speed, a cooling period, a cooling amount (for example, an amount of energy transferred from the workpiece W to the heating support unit 33 to cool the workpiece W), and a cooling position. Furthermore, the heating support unit 33 may include an apparatus that is configured to maintain the temperature of the workpiece W at a desired temperature in addition to or instead of the heating apparatus 331.

### (4) Supplementary Note

Regarding the above described example embodiment, below described Supplementary notes are further disclosed.

### [Supplementary Note 1]

A build system including:
a build apparatus that is configured to irradiate an object with an energy beam from a position above the object and that is configured to build a build object on the object by supplying a build material to an irradiation position of the energy beam;
a support apparatus that includes three or more support members supporting the object; and
a heating apparatus that is configured to heat the object from a position under the object,
wherein
each of the three or more support members includes: a connecting part that contacts the object; and a support part that is configured to support the object, a stiffness of the support part in a first direction is lower than a stiffness of the support part in a second direction that intersects the first direction,
the second direction is a direction that intersects a plane including the connecting parts of the three or more support members.

### [Supplementary Note 2]

The build system according to the Supplementary Note 1, wherein
a size of the support part in the first direction is smaller than a size of the support part in the second direction.

### [Supplementary Note 3]

The build system according to the Supplementary Note 1 or 2, wherein
the first direction is a direction directed from a center of a lower surface of the object toward the connecting part of the support member.

### [Supplementary Note 4]

The build system according to any one of the Supplementary Notes 1 to 3, wherein
the first direction is a direction directed from a center of gravity of a polygon connecting the connecting parts of the three or more support members toward the connecting part.

### [Supplementary Note 5]

The build system according to any one of the Supplementary Notes 1 to 3, wherein
the first direction is a direction directed from a predetermined point inside a polygon connecting the connecting parts of the three or more support members toward the connecting part.

### [Supplementary Note 6]

The build system according to the Supplementary Note 4 or 5, wherein
the heating apparatus is disposed inside the polygon.

### [Supplementary Note 7]

The build system according to any one of the Supplementary Notes 1 to 6, wherein
the second direction is a direction in which the support part extends.

### [Supplementary Note 8]

The build system according to any one of the Supplementary Notes 1 to 7, wherein
the stiffness in a first direction is lower than a stiffness in a third direction that intersects the first direction and the second direction.

### [Supplementary Note 9]

The build system according to any one of the Supplementary Notes 1 to 8 including three or four support members.

### [Supplementary Note 10]

The build system according to any one of the Supplementary Notes 1 to 9 further including a force applying unit that applies a force to the heating apparatus from a position under it.

### [Supplementary Note 11]

The build system according to any one of the Supplementary Notes 1 to 10, wherein
the heating apparatus is configured to heat the object from the position under the object by contacting a lower part of the object supported by the support members

### [Supplementary Note 12]

The build system according to any one of the Supplementary Notes 1 to 11, wherein
the heating apparatus is configured to heat the object from the position under the object through a thermally conductive member between a lower surface of the object and the heating apparatus.

### [Supplementary Note 13]

The build system according to the Supplementary Note 12, wherein
the thermally conductive member includes at least one of a thermally conductive paste and a thermally conductive grease

### [Supplementary Note 14]

The build system according to any one of the Supplementary Notes 1 to 13, wherein
the support part includes an elastic member.

### [Supplementary Note 15]

The build system according to any one of the Supplementary Notes 1 to 14, wherein
the support part includes a plate spring.

### [Supplementary Note 16]

The build system according to the Supplementary Note 15, wherein
the first direction is a thickness direction of the plate spring, and
the second direction is a height direction of the plate spring.

### [Supplementary Note 17]

The build system according to any one of the Supplementary Notes 1 to 16 further including a cooling apparatus that is configured to cool the support member, wherein
the support part is configured to support the object by contacting the object through a first part of the connecting part,
the cooling apparatus is configured to cool the support member through a second part, which is located at a position that is farther from the object than the first part is, of the support member.

### [Supplementary Note 18]

The build system according to the Supplementary Note 17, wherein
the support member extends along the second direction,
the first part includes one end part of the support member in the second direction, and
the second part includes other end part of the support member in the second direction.

### [Supplementary Note 19]

A build system including:
a build apparatus that is configured to irradiate an object with an energy beam from a position above the object and that is configured to build a build object on the object by supplying a build material to an irradiation position of the energy beam;
a support apparatus that supports the object;
a heating apparatus that is configured to heat the object from a position under the object; and
a force applying unit that applies a force acting in a direction directed from the heating apparatus toward a lower surface of the object or a thermally conductive member that is disposed between the heating apparatus and the object.

### [Supplementary Note 20]

The build system according to the Supplementary Note 19, wherein
the heating apparatus includes a heating surface that faces at least a part of the lower surface of the object and that is configured to heat at least a part of the lower surface of the object,
the force is applied by the force applying apparatus so that a size of an area at which the lower surface of the object contacts the heating surface of the heating apparatus to which the force is applied by the heating apparatus is larger than a size of an area at which the lower surface of the object contacts the heating surface of the heating apparatus to which the force is not applied by the heating apparatus.

### [Supplementary Note 21]

The build system according to the Supplementary Note 19 or 20, wherein
the heating apparatus includes a heating surface that faces at least a part of the lower surface of the object and that is configured to heat at least a part of the lower surface of the object,
the force is applied by the force applying apparatus so that a size of an area at which the lower surface of the object contacts the heating surface of the heating apparatus to which the force is applied by the heating apparatus is larger than a size of an area at which the lower surface of the object contacts the heating surface of the heating apparatus to which the force is not applied by the heating apparatus in a situation where the object is deformed.

### [Supplementary Note 22]

The build system according to the Supplementary Note 19 or 20, wherein
the heating apparatus includes a heating surface that faces at least a part of the lower surface of the object and that is configured to heat at least a part of the lower surface of the object,
the force is applied by the force applying apparatus so that a difference between a shape of the lower surface of the object and a shape of the heating surface of the heating apparatus to which the force is applied by the heating apparatus is smaller than a difference between a shape of the lower surface of the object and a shape of the heating surface of the heating apparatus to which the force is not applied by the heating apparatus.

### [Supplementary Note 23]

The build system according to any one of the Supplementary Notes 19 to 22, wherein
the heating apparatus includes a heating surface that faces at least a part of the lower surface of the object and that is configured to heat at least a part of the lower surface of the object,
the force is applied by the force applying apparatus so that a difference between a shape of the lower surface of the object and a shape of the heating surface of the heating apparatus to which the force is applied by the heating apparatus is smaller than a difference between a shape of the lower surface of the object and a shape of the heating surface of the heating apparatus to which the force is not applied by the heating apparatus in a situation where the object is deformed.

### [Supplementary Note 24]

The build system according to the Supplementary Note 19, wherein
the heating apparatus includes a heating surface that faces at least a part of the thermally conductive member and that is configured to heat at least a part of the thermally conductive member,
the force is applied by the force applying apparatus so that a size of an area at which the lower surface of the object contacts the thermally conductive member in a case where the force is applied by the heating apparatus is larger than a size of an area at which the lower surface of the object contacts the thermally conductive member in a case where the force is not applied by the heating apparatus.

### [Supplementary Note 25]

The build system according to the Supplementary Note 19 or 24, wherein
the heating apparatus includes a heating surface that faces at least a part of the thermally conductive member and that is configured to heat at least a part of the thermally conductive member,
the force is applied by the force applying apparatus so that a size of an area at which the lower surface of the object contacts the thermally conductive member to which the force is applied by the heating apparatus is larger than a size of an area at which the lower surface of the object contacts the thermally conductive member to which the force is not applied by the heating apparatus in a situation where the object is deformed.

### [Supplementary Note 26]

The build system according to the Supplementary Note 19, 24, or 25, wherein
the heating apparatus includes a heating surface that faces at least a part of the thermally conductive member and that is configured to heat at least a part of the thermally conductive member,
the force is applied by the force applying apparatus so that a difference between a shape of the lower surface of the object and a shape of the thermally conductive member to which the force is applied by the heating apparatus is smaller than a difference between a shape of the lower surface of the object and a shape of the thermally conductive member to which the force is not applied by the heating apparatus.

### [Supplementary Note 27]

The build system according to any one of the Supplementary Notes 19 and 24 to 26, wherein
the heating apparatus includes a heating surface that faces at least a part of the thermally conductive member and that is configured to heat at least a part of the thermally conductive member,
the force is applied by the force applying apparatus so that a difference between a shape of the lower surface of the object and a shape of the thermally conductive member to which the force is applied by the heating apparatus is smaller than a difference between a shape of the lower surface of the object and a shape of the thermally conductive member to which the force is not applied by the heating apparatus in a situation where the object is deformed.

### [Supplementary Note 28]

The build system according to any one of the Supplementary Notes 19 to 27, wherein
the force applying apparatus includes a spring.

### [Supplementary Note 29]

The build system according to any one of the Supplementary Notes 19 to 28, wherein
the heating apparatus includes: a heating surface that faces at least a part of the lower surface of the object and that is configured to heat at least a part of the lower surface of the object; and an opposite surface that is located opposite to the heating surface,
the force applying apparatus applies the force to the opposite surface.

### [Supplementary Note 30]

The build system according to any one of the Supplementary Notes 19 and 24 to 27, wherein
the heating apparatus includes: a heating surface that faces at least a part of the thermally conductive member and that is configured to heat at least a part of the thermally conductive member; and an opposite surface that is located opposite to the heating surface,
the force applying apparatus applies the force to the opposite surface.

### [Supplementary Note 31]

The build system according to any one of the Supplementary Notes 19, 24 to 27 and 30, wherein
the thermally conductive member includes at least one of a thermally conductive paste and a thermally conductive grease

### [Supplementary Note 32]

The build system according to any one of the Supplementary Notes 19 to 31 further including a cooling apparatus that is configured to cool the force applying apparatus, wherein
the force applying apparatus is configured to apply the force to the heating apparatus by contacting the heating apparatus through a first part of the force applying apparatus,
the cooling apparatus is configured to cool the force applying apparatus through a second part, which is located at a position that is farther from the heating apparatus than the first part is, of the force applying apparatus.

### [Supplementary Note 33]

The build system according to the Supplementary Note 32, wherein
the force applying apparatus includes a force applying member that extends along a first direction,
the first part includes one end part of the force applying in the first direction, and
the second part includes other end part of the force applying in the first direction.

### [Supplementary Note 34]

The build system according to any one of the Supplementary Notes 19 to 33, wherein
a force with which the support member supports the object is stronger than a force that is applied to the object by the force applying apparatus.

### [Supplementary Note 35]

The build system according to any one of the Supplementary Notes 19 to 34, wherein
the heating apparatus is moved upwardly by the force applying apparatus when the object moves upwardly.

### [Supplementary Note 36]

The build system according to any one of the Supplementary Notes 19 to 35, wherein
the heating apparatus is moved downwardly by the force applying apparatus when the object moves downwardly.

### [Supplementary Note 37]

A build system including:
a build apparatus that is configured to irradiate an object with an energy beam from a position above the object and that is configured to build a build object on the object by supplying a build material to an irradiation position of the energy beam;
a support apparatus that supports the object;
a heating apparatus that is configured to heat the object; and
a control apparatus that controls the heating apparatus,
wherein
the heating apparatus includes: a first heating surface that is configured to heat a first part of the object from a position under the object; a second heating surface that is configured to heat a second part, which is different from the first part, of the object from a position under the object,
the control apparatus controls the heating apparatus so that a temperature of the first heating surface and a temperature of the second heating surface are different temperatures.

### [Supplementary Note 38]

The build system according to the Supplementary Note 37, wherein
an amount of a heat transferred per unit time from the second heating surface to the second part is different from an amount of a heat transferred per unit time from the first heating surface to the first part.

### [Supplementary Note 39]

The build system according to the Supplementary Note 37 or 38, wherein
an amount of a heat transferred per unit time from the first heating surface to the first part is larger than an amount of a heat transferred per unit time from the second heating surface to the second part in a case where a third part of the object corresponding to the first part is irradiated with the energy beam, and
the amount of the heat transferred per unit time from the second heating surface to the second part is larger than the amount of the heat transferred per unit time from the first heating surface to the first part in a case where a fourth part of the object corresponding to the second part is irradiated with the energy beam.

### [Supplementary Note 40]

The build system according to any one of the Supplementary Notes 37 to 39 further including:
a first temperature measurement apparatus that is configured to measure a temperature of the first part; and
a second temperature measurement apparatus that is configured to measure a temperature of the second part.

### [Supplementary Note 41]

The build system according to the Supplementary Note 40, wherein
the control apparatus heats the first part by using the first heating surface based on a measured result by the first temperature measurement apparatus, and
the control apparatus controls the heating apparatus to heat the second part by using the second heating surface based on a measured result by the second temperature measurement apparatus.

### [Supplementary Note 42]

The build system according to any one of the Supplementary Notes 37 to 41, wherein
the control apparatus controls the heating apparatus based on the irradiation position of the energy beam.

### [Supplementary Note 43]

The build system according to any one of the Supplementary Notes 37 to 42, wherein
the control apparatus controls the heating apparatus so that the temperature of the first heating surface and the temperature of the second heating surface are the different temperatures at a same time.

### [Supplementary Note 44]

The build system according to any one of the Supplementary Notes 37 to 43, wherein
the control apparatus controls a distribution of a heated amount by the heating apparatus or a temperature distribution of the object.

### [Supplementary Note 45]

The build system according to any one of the Supplementary Notes 37 to 44, wherein
the control apparatus is configured to switch a heat ON and a heat OFF by each of the first and second heating surfaces.

### [Supplementary Note 46]

A build system including:
a build apparatus that is configured to irradiate an object with an energy beam and that is configured to build a build object on the object by supplying a build material to an irradiation position of the energy beam;
a support apparatus that supports the object; and
a heating apparatus that is configured to heat the object,
wherein
the support apparatus includes a support member that is configured to support the object, a stiffness of the support member in a first direction is lower than a stiffness of the support member in a second direction that intersects the first direction.

### [Supplementary Note 47]

A build system including:
a build apparatus that is configured to irradiate an object with an energy beam and that is configured to build a build object on the object by supplying a build material to an irradiation position of the energy beam;
a support apparatus that supports the object;
a heating apparatus that is configured to heat the object; and
a force applying unit that applies a force acting in a direction directed from the heating apparatus toward the object.

### [Supplementary Note 48]

A build system including:
a build apparatus that is configured to irradiate an object with an energy beam and that is configured to build a build object on the object by supplying a build material to an irradiation position of the energy beam;
a support apparatus that supports the object;
a heating apparatus that is configured to heat the object; and
a control apparatus that controls the heating apparatus,
wherein
the heating apparatus includes: a first heating surface that is configured to heat a first part of the object; a second heating surface that is configured to heat a second part, which is different from the first part, of the object.

### [Supplementary Note 49]

A build method including:
building a build object on an object by irradiating the object with an energy beam from a position above the object that is supported by using a support apparatus including three or more support members and supplying a build material to an irradiation position of the energy beam; and
heating the object from a position under the object,
wherein
each of the three or more support members includes: a connecting part that contacts the object; and a support part that is configured to support the object, a stiffness of the support part in a first direction is lower than a stiffness of the support part in a second direction that intersects the first direction,
the second direction is a direction that intersects a plane including the connecting parts of the three or more support members.

### [Supplementary Note 50]

A build method including:
building a build object on an object by irradiating the object with an energy beam from a position above the object that is supported by using a support apparatus and supplying a build material to an irradiation position of the energy beam;
heating the object by using a heating apparatus from a position under the object; and
applying a force acting in a direction directed from the heating apparatus toward a lower surface of the object or a thermally conductive member that is disposed between the heating apparatus and the object.

### [Supplementary Note 51]

A build method including:
building a build object on an object by irradiating the object with an energy beam from a position above the object that is supported by using a support apparatus and supplying a build material to an irradiation position of the energy beam;
heating the object by using a heating apparatus; and
controlling the heating apparatus,
wherein
the heating apparatus includes: a first heating surface that is configured to heat a first part of the object from a position under the object; a second heating surface that is configured to heat a second part, which is different from the first part, of the object from a position under the object,
the controlling the heating apparatus includes controlling the heating apparatus so that a temperature of the first heating surface and a temperature of the second heating surface are different temperatures.

### [Supplementary Note 52]

A build method including:
building a build object on an object by irradiating the object that is supported by using the support apparatus with an energy beam and supplying a build material to an irradiation position of the energy beam; and
heating the object,
wherein
the support apparatus includes a support member that is configured to support the object, a stiffness of the support member in a first direction is lower than a stiffness of the support member in a second direction that intersects the first direction.

### [Supplementary Note 53]

A build method including:
building a build object on an object by irradiating the object that is supported by using the support apparatus with an energy beam and supplying a build material to an irradiation position of the energy beam; and
heating the object by using a heating apparatus; and
applying a force acting in a direction directed from the heating apparatus toward the object.

### [Supplementary Note 54]

A build method including:
building a build object on an object by irradiating the object that is supported by using the support apparatus with an energy beam and supplying a build material to an irradiation position of the energy beam; and
heating the object by using a heating apparatus; and
controlling the heating apparatus,
wherein
the heating apparatus includes: a first heating surface that is configured to heat a first part of the object from a position under the object; a second heating surface that is configured to heat a second part, which is different from the first part, of the object from a position under the object.

At least a part of the features of each example embodiment described above may be appropriately combined with at least another part of the features of each example embodiment described above. A part of the features of each example embodiment described above may not be used. Moreover, the disclosures of all publications and United States patents related to an apparatus and the like cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification, and a build system, which involves such changes, is also intended to be within the technical scope of the present invention.

### Description of Reference Codes

- SYS: build system
- 2: build apparatus
- 3: stage apparatus
- 31: stage
- 33: heating support unit
- 331: heating apparatus
- 3311: heating surface
- 3313: thermally conductive member
- 332: temperature sensor
- 333: force applying apparatus
- 334: support apparatus
- 3340: support member
- 3341: support part
- 3342, 3343: connecting part
- 335: cooling apparatus
- W: workpiece
- EL: build light
- M: build material

## Claims

1. A build system comprising:
a build apparatus that is configured to irradiate an object with an energy beam from a position above the object and that is configured to build a build object on the object by supplying a build material to an irradiation position of the energy beam;
a support apparatus that includes three or more support members supporting the object; and
a heating apparatus that is configured to heat the object from a position under the object,
wherein
each of the three or more support members includes: a connecting part that contacts the object; and a support part that is configured to support the object, a stiffness of the support part in a first direction is lower than a stiffness of the support part in a second direction that intersects the first direction,
the second direction is a direction that intersects a plane including the connecting parts of the three or more support members.

2. The build system according to claim 1, wherein
a size of the support part in the first direction is smaller than a size of the support part in the second direction.

3. The build system according to claim 1 or 2, wherein
the first direction is a direction directed from a center of a lower surface of the object toward the connecting part of the support member.

4. The build system according to any one of claims 1 to 3, wherein
the first direction is a direction directed from a center of gravity of a polygon connecting the connecting parts of the three or more support members toward the connecting part.

5. The build system according to any one of claims 1 to 3, wherein
the first direction is a direction directed from a predetermined point inside a polygon connecting the connecting parts of the three or more support members toward the connecting part.

6. The build system according to claim 4 or 5, wherein
the heating apparatus is disposed inside the polygon.

7. The build system according to any one of claims 1 to 6, wherein
the second direction is a direction in which the support part extends.

8. The build system according to any one of claims 1 to 7, wherein
the stiffness in a first direction is lower than a stiffness in a third direction that intersects the first direction and the second direction.

9. The build system according to any one of claims 1 to 8 comprising three or four support members.

10. The build system according to any one of claims 1 to 9 further comprising a force applying unit that applies a force to the heating apparatus from a position under it.

11. The build system according to any one of claims 1 to 10, wherein
the heating apparatus is configured to heat the object from the position under the object by contacting a lower part of the object supported by the support members

12. The build system according to any one of claims 1 to 11, wherein
the heating apparatus is configured to heat the object from the position under the object through a thermally conductive member between a lower surface of the object and the heating apparatus.

13. The build system according to claim 12, wherein
the thermally conductive member includes at least one of a thermally conductive paste and a thermally conductive grease

14. The build system according to any one of claims 1 to 13, wherein
the support part includes an elastic member.

15. The build system according to any one of claims 1 to 14, wherein
the support part includes a plate spring.

16. The build system according to claim 15, wherein
the first direction is a thickness direction of the plate spring, and
the second direction is a height direction of the plate spring.

17. The build system according to any one of claims 1 to 16 further comprising a cooling apparatus that is configured to cool the support member, wherein
the support part is configured to support the object by contacting the object through a first part of the connecting part,
the cooling apparatus is configured to cool the support member through a second part, which is located at a position that is farther from the object than the first part is, of the support member.

18. The build system according to claim 17, wherein
the support member extends along the second direction,
the first part includes one end part of the support member in the second direction, and
the second part includes other end part of the support member in the second direction.

19. A build system comprising:
a build apparatus that is configured to irradiate an object with an energy beam from a position above the object and that is configured to build a build object on the object by supplying a build material to an irradiation position of the energy beam;
a support apparatus that supports the object;
a heating apparatus that is configured to heat the object from a position under the object; and
a force applying unit that applies a force acting in a direction directed from the heating apparatus toward a lower surface of the object or a thermally conductive member that is disposed between the heating apparatus and the object.

20. The build system according to claim 19, wherein
the heating apparatus includes a heating surface that faces at least a part of the lower surface of the object and that is configured to heat at least a part of the lower surface of the object,
the force is applied by the force applying apparatus so that a size of an area at which the lower surface of the object contacts the heating surface of the heating apparatus to which the force is applied by the heating apparatus is larger than a size of an area at which the lower surface of the object contacts the heating surface of the heating apparatus to which the force is not applied by the heating apparatus.

21. The build system according to claim 19 or 20, wherein
the heating apparatus includes a heating surface that faces at least a part of the lower surface of the object and that is configured to heat at least a part of the lower surface of the object,
the force is applied by the force applying apparatus so that a size of an area at which the lower surface of the object contacts the heating surface of the heating apparatus to which the force is applied by the heating apparatus is larger than a size of an area at which the lower surface of the object contacts the heating surface of the heating apparatus to which the force is not applied by the heating apparatus in a situation where the object is deformed.

22. The build system according to claim 19 or 20, wherein
the heating apparatus includes a heating surface that faces at least a part of the lower surface of the object and that is configured to heat at least a part of the lower surface of the object,
the force is applied by the force applying apparatus so that a difference between a shape of the lower surface of the object and a shape of the heating surface of the heating apparatus to which the force is applied by the heating apparatus is smaller than a difference between a shape of the lower surface of the object and a shape of the heating surface of the heating apparatus to which the force is not applied by the heating apparatus.

23. The build system according to any one of claims 19 to 22, wherein
the heating apparatus includes a heating surface that faces at least a part of the lower surface of the object and that is configured to heat at least a part of the lower surface of the object,
the force is applied by the force applying apparatus so that a difference between a shape of the lower surface of the object and a shape of the heating surface of the heating apparatus to which the force is applied by the heating apparatus is smaller than a difference between a shape of the lower surface of the object and a shape of the heating surface of the heating apparatus to which the force is not applied by the heating apparatus in a situation where the object is deformed.

24. The build system according to claim 19, wherein
the heating apparatus includes a heating surface that faces at least a part of the thermally conductive member and that is configured to heat at least a part of the thermally conductive member,
the force is applied by the force applying apparatus so that a size of an area at which the lower surface of the object contacts the thermally conductive member in a case where the force is applied by the heating apparatus is larger than a size of an area at which the lower surface of the object contacts the thermally conductive member in a case where the force is not applied by the heating apparatus.

25. The build system according to claim 19 or 24, wherein
the heating apparatus includes a heating surface that faces at least a part of the thermally conductive member and that is configured to heat at least a part of the thermally conductive member,
the force is applied by the force applying apparatus so that a size of an area at which the lower surface of the object contacts the thermally conductive member to which the force is applied by the heating apparatus is larger than a size of an area at which the lower surface of the object contacts the thermally conductive member to which the force is not applied by the heating apparatus in a situation where the object is deformed.

26. The build system according to claim 19, 24, or 25, wherein
the heating apparatus includes a heating surface that faces at least a part of the thermally conductive member and that is configured to heat at least a part of the thermally conductive member,
the force is applied by the force applying apparatus so that a difference between a shape of the lower surface of the object and a shape of the thermally conductive member to which the force is applied by the heating apparatus is smaller than a difference between a shape of the lower surface of the object and a shape of the thermally conductive member to which the force is not applied by the heating apparatus.

27. The build system according to any one of claims 19 and 24 to 26, wherein
the heating apparatus includes a heating surface that faces at least a part of the thermally conductive member and that is configured to heat at least a part of the thermally conductive member,
the force is applied by the force applying apparatus so that a difference between a shape of the lower surface of the object and a shape of the thermally conductive member to which the force is applied by the heating apparatus is smaller than a difference between a shape of the lower surface of the object and a shape of the thermally conductive member to which the force is not applied by the heating apparatus in a situation where the object is deformed.

28. The build system according to any one of claims 19 to 27, wherein
the force applying apparatus includes a spring.

29. The build system according to any one of claims 19 to 28, wherein
the heating apparatus includes: a heating surface that faces at least a part of the lower surface of the object and that is configured to heat at least a part of the lower surface of the object; and an opposite surface that is located opposite to the heating surface,
the force applying apparatus applies the force to the opposite surface.

30. The build system according to any one of claims 19 and 24 to 27, wherein
the heating apparatus includes: a heating surface that faces at least a part of the thermally conductive member and that is configured to heat at least a part of the thermally conductive member; and an opposite surface that is located opposite to the heating surface,
the force applying apparatus applies the force to the opposite surface.

31. The build system according to any one of claims 19, 24 to 27 and 30, wherein
the thermally conductive member includes at least one of a thermally conductive paste and a thermally conductive grease

32. The build system according to any one of claims 19 to 31 further comprising a cooling apparatus that is configured to cool the force applying apparatus, wherein
the force applying apparatus is configured to apply the force to the heating apparatus by contacting the heating apparatus through a first part of the force applying apparatus,
the cooling apparatus is configured to cool the force applying apparatus through a second part, which is located at a position that is farther from the heating apparatus than the first part is, of the force applying apparatus.

33. The build system according to claim 32, wherein
the force applying apparatus includes a force applying member that extends along a first direction,
the first part includes one end part of the force applying in the first direction, and
the second part includes other end part of the force applying in the first direction.

34. The build system according to any one of claims 19 to 33, wherein
a force with which the support member supports the object is stronger than a force that is applied to the object by the force applying apparatus.

35. The build system according to any one of claims 19 to 34, wherein
the heating apparatus is moved upwardly by the force applying apparatus when the object moves upwardly.

36. The build system according to any one of claims 19 to 35, wherein
the heating apparatus is moved downwardly by the force applying apparatus when the object moves downwardly.

37. A build system comprising:
a build apparatus that is configured to irradiate an object with an energy beam from a position above the object and that is configured to build a build object on the object by supplying a build material to an irradiation position of the energy beam;
a support apparatus that supports the object;
a heating apparatus that is configured to heat the object; and
a control apparatus that controls the heating apparatus,
wherein
the heating apparatus includes: a first heating surface that is configured to heat a first part of the object from a position under the object; a second heating surface that is configured to heat a second part, which is different from the first part, of the object from a position under the object,
the control apparatus controls the heating apparatus so that a temperature of the first heating surface and a temperature of the second heating surface are different temperatures.

38. The build system according to claim 37, wherein
an amount of a heat transferred per unit time from the second heating surface to the second part is different from an amount of a heat transferred per unit time from the first heating surface to the first part.

39. The build system according to claim 37 or 38, wherein
an amount of a heat transferred per unit time from the first heating surface to the first part is larger than an amount of a heat transferred per unit time from the second heating surface to the second part in a case where a third part of the object corresponding to the first part is irradiated with the energy beam, and
the amount of the heat transferred per unit time from the second heating surface to the second part is larger than the amount of the heat transferred per unit time from the first heating surface to the first part in a case where a fourth part of the object corresponding to the second part is irradiated with the energy beam.

40. The build system according to any one of claims 37 to 39 further comprising:
a first temperature measurement apparatus that is configured to measure a temperature of the first part; and
a second temperature measurement apparatus that is configured to measure a temperature of the second part.

41. The build system according to claim 40, wherein
the control apparatus heats the first part by using the first heating surface based on a measured result by the first temperature measurement apparatus, and
the control apparatus controls the heating apparatus to heat the second part by using the second heating surface based on a measured result by the second temperature measurement apparatus.

42. The build system according to any one of claims 37 to 41, wherein
the control apparatus controls the heating apparatus based on the irradiation position of the energy beam.

43. The build system according to any one of claims 37 to 42, wherein
the control apparatus controls the heating apparatus so that the temperature of the first heating surface and the temperature of the second heating surface are the different temperatures at a same time.

44. The build system according to any one of claims 37 to 43, wherein
the control apparatus controls a distribution of a heated amount by the heating apparatus or a temperature distribution of the object.

45. The build system according to any one of claims 37 to 44, wherein
the control apparatus is configured to switch a heat ON and a heat OFF by each of the first and second heating surfaces.

46. A build system comprising:
a build apparatus that is configured to irradiate an object with an energy beam and that is configured to build a build object on the object by supplying a build material to an irradiation position of the energy beam;
a support apparatus that supports the object; and
a heating apparatus that is configured to heat the object,
wherein
the support apparatus includes a support member that is configured to support the object, a stiffness of the support member in a first direction is lower than a stiffness of the support member in a second direction that intersects the first direction.

47. A build system comprising:
a build apparatus that is configured to irradiate an object with an energy beam and that is configured to build a build object on the object by supplying a build material to an irradiation position of the energy beam;
a support apparatus that supports the object;
a heating apparatus that is configured to heat the object; and
a force applying unit that applies a force acting in a direction directed from the heating apparatus toward the object.

48. A build system comprising:
a build apparatus that is configured to irradiate an object with an energy beam and that is configured to build a build object on the object by supplying a build material to an irradiation position of the energy beam;
a support apparatus that supports the object;
a heating apparatus that is configured to heat the object; and
a control apparatus that controls the heating apparatus,
wherein
the heating apparatus includes: a first heating surface that is configured to heat a first part of the object; a second heating surface that is configured to heat a second part, which is different from the first part, of the object.
